# EUROPEAN PATENT APPLICATION

(11) **EP 2 801 934 A1**
(43) Date of publication of application: **12.11.2014**
(21) Application number: 14167511.6
(22) Date of filing: 08.05.2014
(51) Int. Cl.: G06Q 10/06

(54) **Remote assistance via a cloud platform for industrial automation**

(30) Priority: 09.05.2013 US 201361821639 P; 22.11.2013 US 201314088011
(71) Applicant: Rockwell Automation Technologies, Inc., Mayfield Heights, OH 44124 (US)
(72) Inventor: Asenjo, Juan L., Timberlake, OH 44095 (US); Strohmenger, John, Strongsville, OH 44136 (US); Nawalaniec, Stephen Thomas, Southlake, TX 76092 (US); Hegrat, Bradford Henry, Montville, OH 44064 (US); Harkulich, Joseph A., Willoughby, OH 44094 (US); Korpela, Jessica Lin, Milwaukee, WI 53207 (US); Wright, Jenifer Rydberg, Renton, WA 98058 (US); Hessmer, Rainer, Rancho Santa Margarita, CA 92688 (US); Dyck, John, Chardon, OH 44024 (US); Hill, Edward Alan, Chagrin Falls, OH 44022 (US); Conti, Salvatore T., Olmsted Township, OH 44138 (US)
(74) Representative: Grünecker, Kinkeldey, Stockmair & Schwanhäusser

(57) **Abstract**

A remote technical support system leverages a cloud platform to automate technical support interactions, facilitating rapid diagnosis and solution of detected performance issues in industrial systems. The technical support system facilitates automated collection of relevant system data from a customer's industrial assets in the event of a detected performance issue requiring involvement of a technical support entity. The relevant system data can be sent to the cloud platform in response to a manual request for support at the plant floor, or automatically in response to detection of a possible device failure or performance issue. The cloud-based remote technical support system then routes the data to a suitable remote support representative, providing the representative with information about customer's industrial system and operations that may be relevant in connection with diagnosing the issue.

## Description

### RELATED APPLICATIONS

This application claims the benefit of U.S. Provisional Patent Application Serial No. 61/821,639, filed on May 9, 2013, and entitled "REMOTE SERVICES AND ASSET MANAGEMENT SYSTEMS AND METHODS," the entirety of which is incorporated herein by reference.

### TECHNICAL FIELD

The subject application relates generally to industrial automation, and, for example, to automated remote assistance for industrial devices and assets using a cloud platform.

### BACKGROUND

Industrial controllers and their associated I/O devices are central to the operation of modern automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such programming structures. In general, industrial controllers read input data from sensors and metering devices that provide discreet and telemetric data regarding one or more states of the controlled system, and generate control outputs based on these inputs in accordance with the user-defined program.

In addition to industrial controllers and their associated I/O devices, some industrial automation systems may also include low-level control systems, such as vision systems, barcode marking systems, variable frequency drives, industrial robots, and the like which perform local control of portions of the industrial process, or which have their own localized control systems.

Industrial automation systems that make up a given industrial enterprise are often maintained by on-site plant personnel (*e.g*., maintenance personnel, plant engineers. *etc*.). Given the diversity and complexity of industrial assets that make up a given industrial system, many device or system maintenance issues require a level of specialized device expertise not possessed by on-site maintenance personnel, who may be responsible for a wide range of disparate industrial assets and therefore possess a more generalized Knowledge of their assets. Consequently, industrial enterprises generally rely, to some degree, on expert support personnel for assistance with certain technical support issues.

Maintenance personnel wishing to obtain technical assistance to resolve a device failure or other performance issue must typically contact a remote technical support person by phone and provide relevant information about their particular industrial device, software, system configuration, *etc*. Providing a complete set of relevant information required by the technical support personnel to resolve a maintenance issue sometimes requires a level of knowledge about the customer's system that on-site plant personnel may not possess. Moreover, an unexpected device or system performance abnormality may be a result of a seemingly unrelated change to the customer's system. For example, a particular industrial asset may demonstrate an apparent performance degradation as a result of an incompatibility with another newly installed device, or as a result of a seemingly unrelated configuration parameter modification. In such cases, the on-site maintenance personnel may omit important details about their particular system configuration, modification history, *etc.,* that would help the technical support representative to identify the root cause of the issue.

The above-described deficiencies of today's industrial control and business systems are merely intended to provide an overview of some of the problems of conventional systems, and are not intended to be exhaustive. Other problems with conventional systems and corresponding benefits of the various non-limiting embodiments described herein may become further apparent upon review of the following description.

### SUMMARY

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

One or more embodiments of the present disclosure relate to the use of cloud-based services to simplify and automate interactions between plant personnel and a remote technical support representative, and to facilitate more rapid and accurate diagnosis of technical support issues. To this end, industrial devices (*e.g*., controllers, motor drives, *etc*.) can be designed to work in conjunction with an automated web-based or cloud-based remotes support system. In some embodiments, cloud-capable industrial devices can automatically collect or generate relevant system data that may be required to diagnose the maintenance issue. Such industrial devices can collect or generate the relevant data automatically in response to detection of a possible performance concern, or in response to a manual request for technical support (*e.g*., by pressing a service request button on the device). System data collected or gathered by the device can include, but is not limited to, data stored on the device itself, information describing a system context at the time the problem occurred, data describing the local plant network, or other relevant data.

The cloud-capable industrial device can migrate the collected system data to a cloud platform in association with a customer identifier. Cloud-based remote assistance services can then route the collected system data to a client device associated with a suitable remote support person for diagnosis. In some embodiments, the cloud-based services can also provide the technical support person with remote access to the customer's system to facilitate long-distance software or configuration modifications if necessary.

In some embodiments, the system data sent to the cloud platform in response to a request for technical assistance can be correlated with system data previously collected for the customer and maintained on cloud-based storage. This previously collected data can include records of the customer's automation system configuration, devices, current firmware revisions, network configurations, *etc*. Cloud-based technical support services can analyze the system data sent by the industrial device at the time the remote support request was initiated in view of this previously collected customer data to facilitate identifying a root cause of the performance issue.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a high-level overview of an industrial enterprise that leverages cloud-based services.
FIG. 2 is a block diagram of an example cloud-aware industrial device.
FIG. 3 illustrates a configuration in which an industrial device acts as a cloud proxy for other industrial devices comprising an industrial system.
FIG. 4 illustrates a configuration in which a firewall box serves as a cloud proxy for a set of industrial devices.
FIG. 5 is a block diagram of an exemplary cloud-based remote support system.
FIG. 6 illustrates collection of customer-specific industrial data by a cloud-based remote support system.
FIG. 7 illustrates a hierarchical relationship between example data classes.
FIG. 8 illustrates migration of device model data to a cloud platform by a cloud-aware industrial device.
FIG. 9 illustrates an example device model delivered to a cloud platform for use by a cloud-based remote support system.
FIG. 10 illustrates a cloud-based system storage architecture for providing remote support services.
FIG. 11 illustrates a general overview of a cloud-based system that uses the data collection and monitoring tools described above to facilitate remote technical support.
FIG. 12 illustrates an example cloud-based remote support system that automates aspects of a technical support interaction between an industrial enterprise and a remote technical support representative.
FIG. 13 illustrates example content of aggregated support data that can be provided to a remote service representative by a cloud-based remote support system.
FIG. 14 illustrates the use of hierarchical, multi-level baselines to detect deviations from normal, optimal, or preferred performance of an industrial system.
FIG. 15 illustrates example hierarchical system aspects for which baselines can be maintained by a remote support system.
FIG. 16 is a flowchart of an example methodology for collecting relevant diagnostic data from an industrial system and sending the diagnostic data to a cloud-based remote support service.
FIG. 17 is a flowchart of an example methodology for processing and routing a request for technical support for an industrial system.
FIG. 18 is a flowchart of an example methodology for providing information relating to a technical support issue to a technical support representative via a cloud platform.
FIG. 19 is an example computing environment.
FIG. 20 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (*e.g*., screwed or bolted) or removably affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers.

Also, components as described herein can execute from various computer readable storage media having various data structures stored thereon. The components may communicate via local and/or remote processes such as in accordance with a signal having one or more data packets (*e.g*., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B: or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; *etc*. Likewise, the term "group" as utilized herein refers to a collection of one or more entities; *e.g*., a group of nodes refers to one or more nodes.

Various aspects or features will be presented in terms of systems that may include a number of devices, components, modules, and the like. It is to be understood and appreciated that the various systems may include additional devices, components, modules, *etc*. and/or may not include all of the devices, components, modules *etc*. discussed in connection with the figures. A combination of these approaches also can be used.

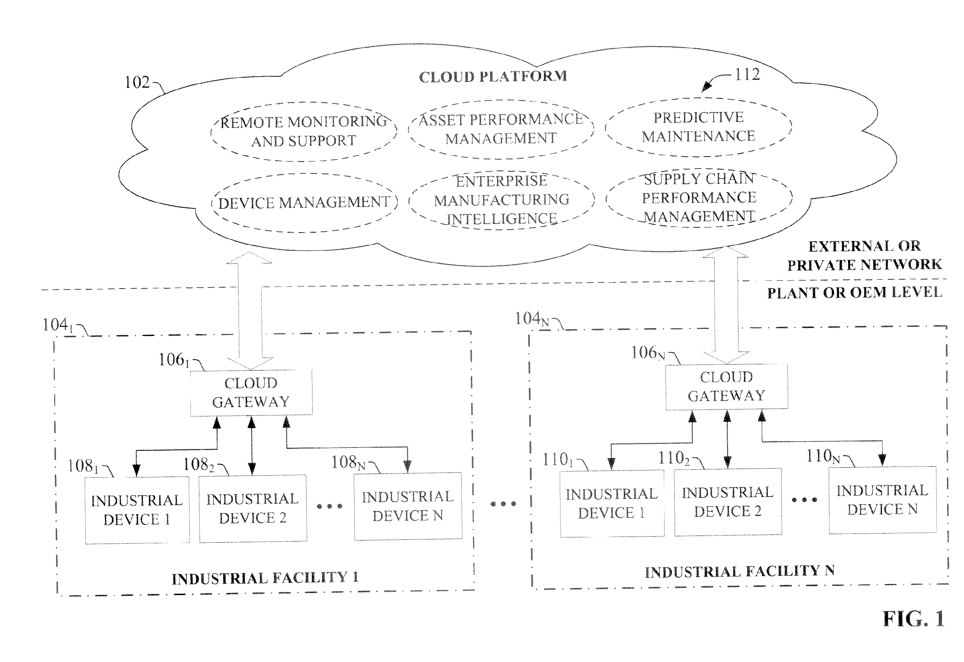

To provide a general context for the cloud-based remote support system and services described herein, FIG. 1 illustrates a high-level overview of an industrial enterprise that leverages cloud-based services. The enterprise comprises one or more industrial facilities 104, each having a number of industrial devices 108 and 110 in use. The industrial devices 108 and 110 can make up one or more automation systems operating within the respective facilities 104. Exemplary automation systems can include, but are not limited to, batch control systems (*e.g*., mixing systems), continuous control systems (*e.g*., PID control systems), or discrete control systems While some aspects of this disclosure are described with reference to either discrete or process control applications, it is to be understood that the examples described herein are not limited to either discrete or process control industries or operations. Industrial devices 108 and 110 can include such devices as industrial controllers (*e.g*., programmable logic controllers or other types of programmable automation controllers); field devices such as sensors and meters; motor drives; human-machine interfaces (HMIs); industrial robots, barcode markers and readers; vision system devices (*e.g*., vision cameras); smart welders; or other such industrial devices.

Exemplary automation systems can include one or more industrial controllers that facilitate monitoring and control of their respective processes. The controllers exchange data with the field devices using native hardwired I/O or via a plant network such as Ethernet/IP, Data Highway Plus, ControlNet, Devicenet, or the like. A given controller typically receives any combination of digital or analog signals from the field devices indicating a current state of the devices and their associated processes (*e.g*., temperature, position, part presence or absence, fluid level, *etc*.), and executes a user-defined control program that performs automated decision-making for the controlled processes based on the received signals. The controller then outputs appropriate digital and/or analog control signaling to the field devices in accordance with the decisions made by the control program. These outputs can include device actuation signals, temperature or position control signals, operational commands to a machining or material handling robot, mixer control signals, motion control signals, and the like. The control program can comprise any suitable type of code used to process input signals read into the controller and to control output signals generated by the controller, including but not limited to ladder logic, sequential function charts, function block diagrams, structured text, or other such platforms.

Although the exemplary overview illustrated in FIG. 1 depicts the industrial devices 108 and 110 as residing in fixed-location industrial facilities 104, the industrial devices may also be part of a mobile control and/or monitoring application, such as a system contained in a transportation unit (*e.g*., a truck or other service vehicle) or in a mobile industrial facility. In another example, industrial devices 108 and 110 may comprise devices that perform no control or monitoring of an industrial system, but instead function only to feed data to the cloud-based remote support system (*e.g*., a mobile weather system).

According to one or more embodiments of this disclosure, industrial devices 108 and 110 can be coupled to a cloud platform 102 to leverage cloud-based applications and services. That is, the industrial devices 108 and 110 can be configured to discover and interact with cloud-based computing services 112 hosted by cloud platform 102. Cloud platform 102 can be any infrastructure that allows shared computing services 112 to be accessed and utilized by cloud-capable devices. Cloud platform 102 can be a public cloud accessible via the Internet by devices having Internet connectivity and appropriate authorizations to utilize the services 112. In some scenarios, cloud platform 102 can be provided by a cloud provider as a platform-as-a-service (PaaS), and the services 112 can reside and execute on the cloud platform 102 as a cloud-based service. In some such configurations, access to the cloud platform 102 and associated services 112 can be provided to customers as a subscription service by an owner of the services 112. Alternatively, cloud platform 102 can be a private cloud operated internally by the enterprise. An exemplary private cloud platform can comprise a set of servers hosting the cloud services 112 and residing on a corporate network protected by a firewall.

Cloud services 112 can include, but are not limited to, data storage, data analysis, control applications (*e.g*., applications that can generate and deliver control instructions to industrial devices 108 and 110 based on analysis of near real-time system data or other factors), remote monitoring and support, device management, asset performance management, predictive maintenance services, enterprise manufacturing intelligence services, supply chain performance management, notification services, or other such applications. If cloud platform 102 is a web-based cloud, industrial devices 108 and 110 at the respective industrial facilities 104 may interact with cloud services 112 via the Internet. In an exemplary configuration, industrial devices 108 and 110 may access the cloud services 112 through separate cloud gateways 106 at the respective industrial facilities 104, where the industrial devices 108 and 110 connect to the cloud gateways 106 through a physical or wireless local area network or radio link. In another exemplary configuration, the industrial devices 108 and 110 may access the cloud platform directly using an integrated cloud gateway service. Cloud gateways 106 may also comprise an integrated component of a network infrastructure device, such as a firewall box, router, or switch.

Providing industrial devices with cloud capability via cloud gateways 106 can offer a number of advantages particular to industrial automation. For one, cloud-based storage offered by the cloud platform 102 can be easily scaled to accommodate the large quantities of data generated daily by an industrial enterprise. Moreover, multiple industrial facilities at different geographical locations can migrate their respective automation data to the cloud platform 102 for aggregation, collation, collective big data analysis, and enterprise-level reporting without the need to establish a private network between the facilities. Industrial devices 108 and 110 and/or cloud gateways 106 having smart configuration capability can be configured to automatically detect and communicate with the cloud platform 102 upon installation at any facility, simplifying integration with existing cloud-based data storage, analysis, or reporting applications used by the enterprise.

In another exemplary application, cloud-based diagnostic applications can access the industrial devices 108 and 110 via cloud gateways 106 to monitor the health and/or performance of respective automation systems or their associated industrial devices across an entire plant, or across multiple industrial facilities that make up an enterprise. In another example, cloud-based lot control applications can be used to track a unit of product through its stages of production and collect production data for each unit as it passes through each stage (*e.g*., barcode identifier, production statistics for each stage of production, quality test data, abnormal flags, *etc*.). These industrial cloud-computing applications are only intended to be exemplary, and the systems and methods described herein are not limited to these particular applications. As these examples demonstrate, the cloud platform 102, working with cloud gateways 106, can allow builders of industrial applications to provide scalable solutions as a service, removing the burden of maintenance, upgrading, and backup of the underlying infrastructure and framework.

As noted above, industrial data can be migrated from industrial devices to the cloud platform using cloud gateways. To this end, some devices may include integrated cloud gateways that directly interface each device to the cloud platform. Alternatively, some configurations may utilize a cloud proxy device that collects industrial data from multiple devices and sends the data to the cloud platform. Such a cloud proxy can comprise a dedicated data collection device, such as a proxy server that shares a network with the industrial devices. Alternatively, the cloud proxy can be a peer industrial device that collects data from other industrial devices.

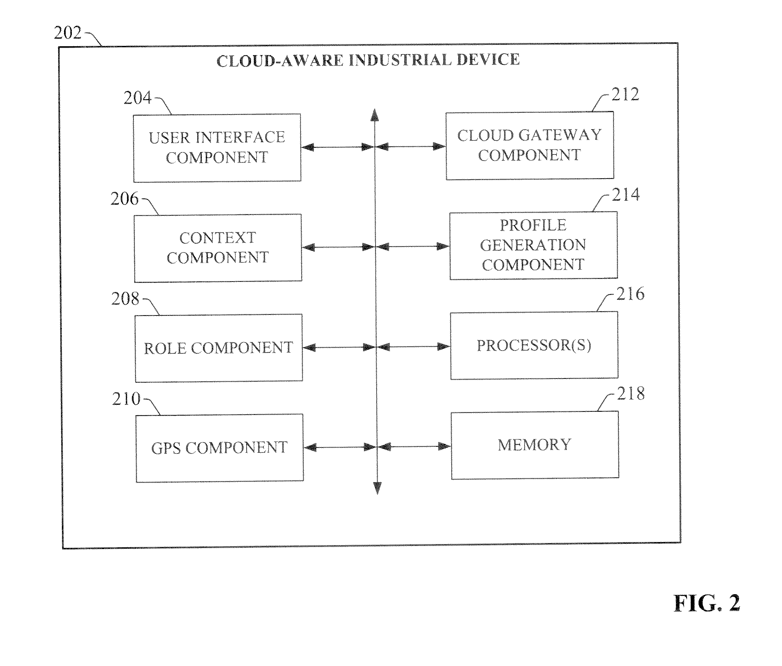

FIG. 2 is a block diagram of an exemplary cloud-aware industrial device according to one or more embodiments of this disclosure. Aspects of the systems, apparatuses, or processes explained in this disclosure can constitute machine-executable components embodied within machine(s), *e.g*., embodied in one or more computer-readable mediums (or media) associated with one or more machines. Such components, when executed by one or more machines, *e.g*., computer(s), computing device(s), automation device(s), virtual machine(s), *etc*., can cause the machine(s) to perform the operations described.

Cloud-aware industrial device 202 can include a user interface component 204, a context component 206, a role component 208, a global positioning system (GPS) component 210, a cloud gateway component 212, a profile generation component 214, one or more processors 216, and memory 218. In various embodiments, one or more of the user interface component 204, context component 206, role component 208, GPS component 210, cloud gateway component 212, profile generation component 214, the one or more processors 216, and memory 218 can be electrically and/or communicatively coupled to one another to perform one or more of the functions of the cloud-aware industrial device 202. In some embodiments, components 204, 206, 208, 210, 212, and 214 can comprise software instructions stored on memory 218 and executed by processor(s) 216. Cloud-aware industrial device 202 may also interact with other hardware and/or software components not depicted in FIG. 2. For example, processor(s) 216 may interact with one or more external user interface devices, such as a keyboard, a mouse, a display monitor, a touchscreen, or other such interface devices.

User interface component 204 can be configured to receive user input and to render output to the user in any suitable format (*e.g*., visual, audio, tactile, *etc*.). User input can be, for example, configuration information defining whether the cloud-aware industrial device 202 is allowed to push data to and/or pull data from a cloud platform. User input can also comprise address information for a particular cloud platform or application with which the cloud-aware industrial device 202 is to communicate. Context component 206 can be configured to identify a context of the cloud-aware industrial device 202 within a plant environment. This can include, for example, identifying other industrial devices in proximity to or sharing a plant network with cloud-aware industrial device 202, identifying a location of the cloud-aware industrial device 202 within a the overall enterprise or plant hierarchy, identifying data tags associated with the cloud-aware industrial device 202 and available for retrieval by cloud applications, and other such information.

Role component 208 can be configured to determine a role of the cloud-aware industrial device 202 within the industrial automation system. Such information can be provided to the cloud platform as part of a device profile, as will be described in more detail below. GPS component 210 can be configured to determine a geographical location of the cloud-aware industrial device 202. In this context, the GPS component 210 is to be understood as a general localization provider, which may be based on GPS, wireless triangulation, or manually entered location information. Cloud gateway component 212 can be configured to couple the cloud-aware industrial device to a web-based or private cloud platform and exchange data with the cloud platform. Profile generation component 214 can be configured to generate a device profile or model for the cloud-aware industrial device 202 based on information provided by context component 206, role component 208, and/or GPS component 210. The one or more processors 216 can perform one or more of the functions described herein with reference to the systems and/or methods disclosed. Memory 218 can be a computer-readable storage medium storing computer-executable instructions and/or information for performing the functions described herein with reference to the systems and/or methods disclosed.

Cloud-aware industrial device 202 can be virtually any type of device used in conjunction with monitor and/or control of an industrial automation system, including but not limited to an industrial controller (*e.g*., programmable logic controllers or other types of programmable automation controllers); a field device such as a sensor and meter; a motor drive; a human-machine interface (HMI) or other type of operator interface; an industrial robot, a barcode marker or reader; a vision system device (*e.g*., vision camera); a smart welder; or other such industrial devices. In one or more embodiments, such industrial devices can include capabilities to automatically communicate with a cloud platform and provide information about the device's context, role, location, *etc.* to facilitate automatic integration with one or more cloud-based applications or services, as well as integration with other components of the industrial system.

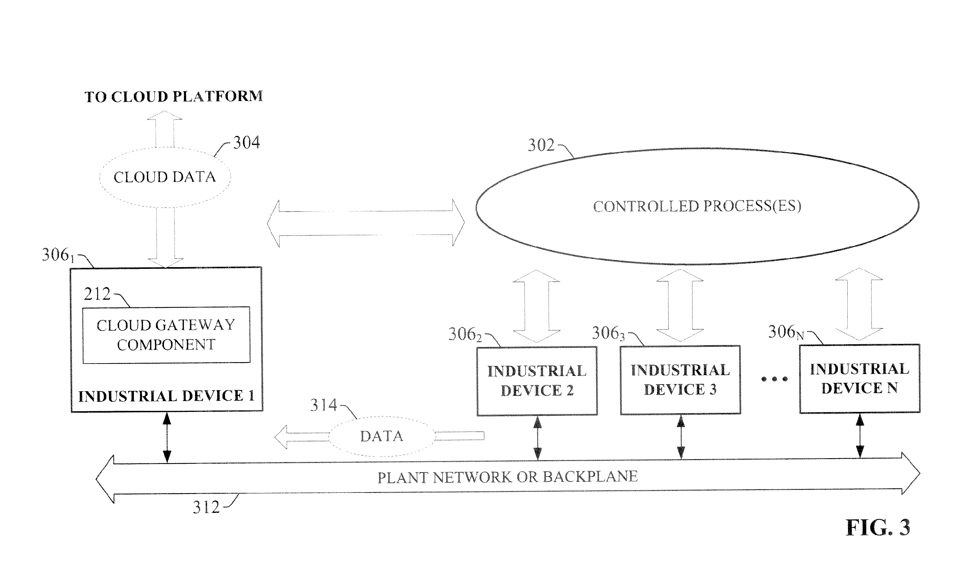

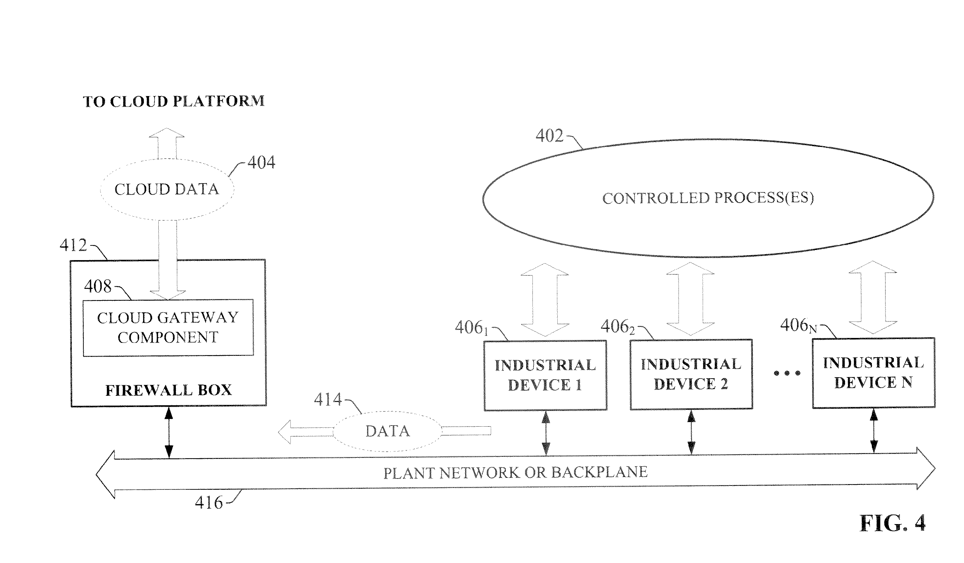

FIGs. 3 and 4 depict example techniques for migrating system data (*e.g*., operational data, device information, contextual data, *etc.)* to the cloud platform via proxy devices for analysis and routing by the cloud-based remote support system. FIG. 3 depicts a configuration in which an industrial device acts as a cloud proxy for other industrial devices comprising an industrial system. The industrial system comprises a plurality of industrial devices 306₁ - 306_{N} which collectively monitor and/or control one or more controlled processes 302. The industrial devices 306₁ - 306_{N} respectively generate and/or collect process data relating to control of the controlled process(es) 302. For industrial controllers such as PLCs or other automation controllers, this can include collecting data from telemetry devices connected to the controller's I/O, generating data internally based on measured process values, *etc*.

In the configuration depicted in FIG. 3, industrial device 306₁ acts as a proxy for industrial devices 306₂ - 306_{N}, whereby data 314 from devices 306₂ - 306_{N} is sent to the cloud via proxy industrial device 306₁. Industrial devices 306₂ - 306_{N} can deliver their data 314 to proxy industrial device 306₁ over plant network or backplane 312 (*e.g*., a Common Industrial Protocol (CIP) network or other suitable network protocol). Using such a configuration, it is only necessary to interface one industrial device to the cloud platform (via cloud gateway component 212). In some embodiments, cloud gateway component 212 may perform preprocessing on the gathered data prior to migrating the data to the cloud platform (*e.g*., time stamping, filtering, formatting, summarizing, compressing, *etc*.). The collected and processed data can then be pushed to the cloud platform as cloud data 304 via cloud gateway component 212. Once migrated, the cloud-based predictive maintenance system can classify the data according to the example classification discussed in more detail below above.

While the proxy device illustrated in FIG. 3 is depicted as an industrial device that itself performs monitoring and/or control of a portion of controlled process(es) 302, other types of devices can also be configured to serve as a cloud proxies for multiple industrial devices according to one or more embodiments of this disclosure. For example, FIG. 4 illustrates an embodiment in which a firewall box 412 serves as a cloud proxy for a set of industrial devices 406₁ - 406_{N}. Firewall box 412 can act as a network infrastructure device that allows plant network 416 to access an outside network such as the Internet, while also providing firewall protection that prevents unauthorized access to the plant network 416 from the Internet. In addition to these firewall functions, the firewall box 412 can include a cloud gateway component 408 that interfaces the firewall box 412 with one or more cloud-based services. In a similar manner to proxy industrial device 306₁ of FIG. 2, the firewall box 412 can collect industrial data 414 from industrial devices 406₁ - 406_{N}, which monitor and control respective portions of controlled process(es) 402. Firewall box 412 can include a cloud gateway component 408 that applies appropriate preprocessing to the gathered industrial data 414 prior to pushing the data to the cloud-based remote assistance system as cloud data 404. Firewall box 412 can allow industrial devices 406₁ - 406_{N} to interact with the cloud platform without directly exposing the industrial devices to the Internet.

In some embodiments, cloud gateway components 212 or 408 can tag the collected industrial data with contextual metadata prior to pushing the data to the cloud platform. Such contextual metadata can include, for example, a time stamp, a location of the device at the time the data was generated, or other such information. In another example, some cloud-aware devices can comprise smart devices capable of detertnining their own context within the plant or enterprise environment. Such devices can determine their location within a hierarchical plant context or device topology. Knowledge of the location of a given device or machine within the context of the larger plant hierarchy can yield useful insights that can be leveraged to facilitate remote trouble-shooting. For example, a failure or performance degradation of a given machine on a production line can be discovered to have been caused by an abnormal behavior of other machines on the same line, based on the known relationship between the respective machines. Data generated by such devices can adhere to a hierarchical plant model that defines multiple hierarchical levels of an industrial enterprise (*e.g*., a workcell level, a line level, an area level, a site level, an enterprise level, *etc*.), such that the data is identified in terms of these hierarchical levels. This can allow a common terminology to be used across an entire industrial enterprise to identify devices and their associated data. Cloud-based applications and services that model an enterprise according to such an organizational hierarchy can represent industrial controllers, devices, machines, or processes as data structures (*e.g*., type instances) within this organizational hierarchy to provide context for data generated by devices within the enterprise relative to the enterprise as a whole. Such a convention can replace the flat name structure employed by some industrial applications.

In some embodiments, cloud gateway components 212 and 408 can comprise uni-directional "data only" gateways that are configured only to move data from the premises to the cloud platform. Alternatively, cloud gateway components 212 and 408 can comprise bi-directional "data and configuration" gateways that are additionally configured to receive configuration or instruction data from services running on the cloud platform. Some cloud gateway components may utilize store-and-forward technology that allows the gathered industrial data to be temporarily stored locally on storage associated with the cloud gateway component in the event that communication between the cloud gateway component and cloud platform is disrupted. In such events, the cloud gateway components will forward the stored data to the cloud platform when the communication link is re-established.

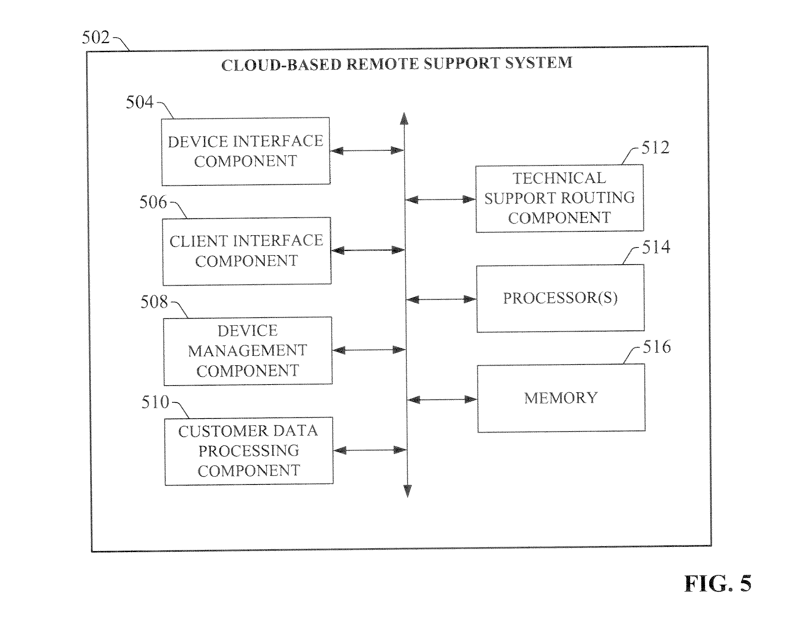

FIG. 5 is a block diagram of an exemplary cloud-based remote support system 502 according to one or more embodiments of this disclosure. Remote support system 502 can include a device interface component 504, client interface component 506, a device management component 508, a customer data processing component 510, a technical support routing component 512, one or more processors 514, and memory 516. In various embodiments, one or more of the device interface component 504, client interface component 506, device management component 508, customer data processing component 510, technical support routing component 512, the one or more processors 514, and memory 516 can be electrically and/or communicatively coupled to one another to perform one or more of the functions of the remote support system 502. In some embodiments, components 504, 506, 508, 510, and 512 can comprise software instructions stored on memory 516 and executed by processor(s) 516. Remote support system 502 may also interact with other hardware and/or software components not depicted in FIG. 5. For example, processor(s) 514 may interact with one or more external user interface devices, such as a keyboard, a mouse, a display monitor, a touchscreen, or other such interface devices.

Device interface component 504 can be configured to receive industrial data (*e.g*., configuration data, status data, process variable data, *etc*.) sent by one or more cloud-capable industrial devices (*e.g*., cloud-aware industrial device 202), cloud gateways, or other sources of industrial data. Device interface component 504 can also deliver data to the industrial devices, including but not limited to remotely administered software or firmware upgrades, remotely delivered configuration data, *etc.*

Client interface component 506 can be configured to exchange data with one or more client devices via an Internet connection. For example, client interface component 506 can receive customer profile data, requests for firmware upgrades, customer service selections, or other such information from a client device. Client interface component 506 can also deliver software or firmware upgrade notifications, notifications of impending device failures, identification of asset or system inefficiencies, configuration recommendations, or other such data to the client device.

Device management component 508 can be configured to maintain and manage current information about devices comprising one or more industrial assets in use at an industrial facility. This information can include device identifiers, current firmware versions, current device configuration settings, information on neighboring devices that interact with the device, a role of the device within a larger system context, or other such information.

Customer data processing component 510 can be configured to analyze performance and configuration data gathered from a customer's industrial assets to identify possible causes of a given asset failure or degradation, identify sets of previously collected data that may be useful in diagnosing a performance problem, or other such results, as will be described in more detail below. Technical support routing component 512 can be configured to determine a suitable technical support representative or department for handling a given request for technical support, and to route relevant data to the appropriate technical support client device(s) via the cloud platform.

The one or more processors 514 can perform one or more of the functions described herein with reference to the systems and/or methods disclosed. Memory 516 can be a computer-readable storage medium storing computer-executable instructions and/or information for performing the functions described herein with reference to the systems and/or methods disclosed.

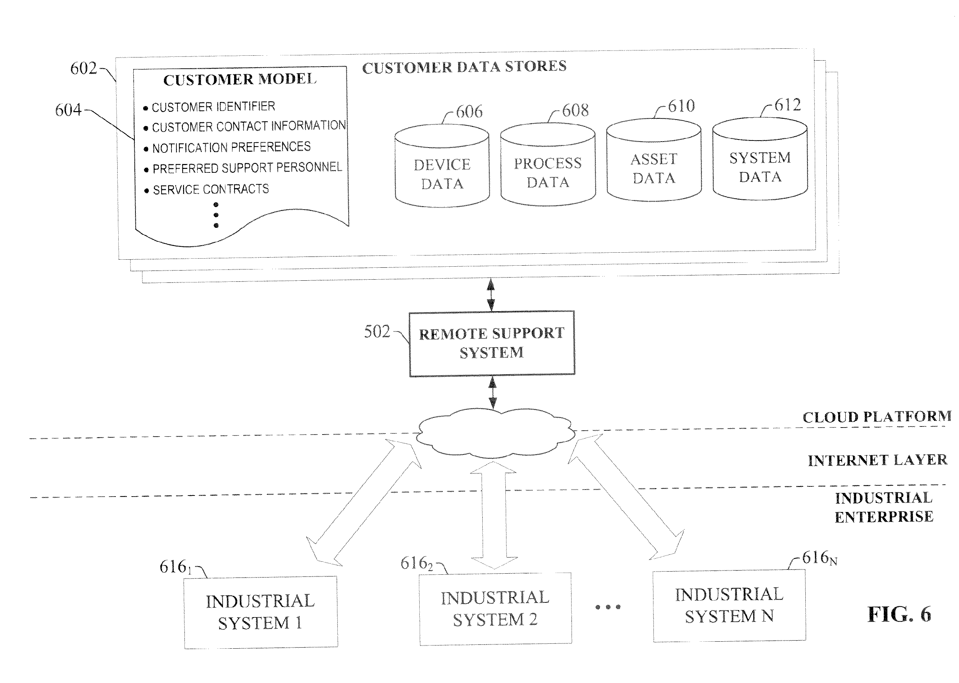

FIG. 6 illustrates collection of customer-specific industrial data by a cloud-based remote support system according to one or more embodiments. Remote support system 502 can execute as a cloud-based service on a cloud platform (*e.g*., cloud platform 102 of FIG. 1), and collect data from multiple industrial systems 616. Industrial systems 616 can comprise different industrial automation systems within a given facility and/or different industrial facilities at diverse geographical locations. Industrial systems 616 can also correspond to different business entities (*e.g*., different industrial enterprises or customers), such that remote services system 502 collects and maintains a distinct customer data store 602 for each customer or business entity.

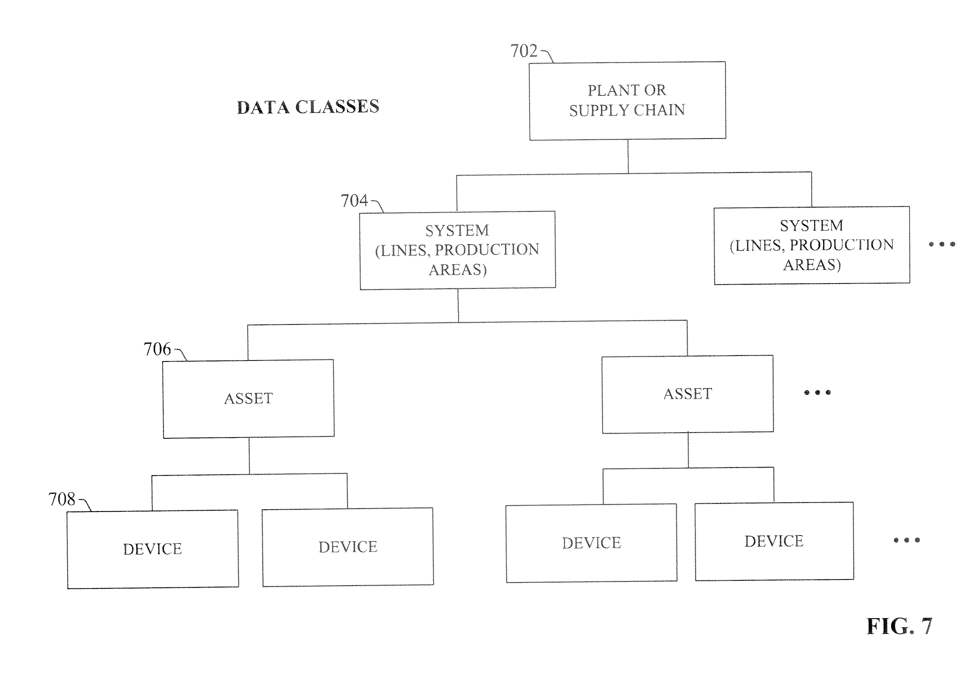

Remote support system 502 can organize manufacturing data collected from industrial systems 616 according to various classes. In the illustrated example, manufacturing data is classified according to device data 606, process data 608, asset data 610, and system data 612. FIG. 7 illustrates a hierarchical relationship between these example data classes. A given plant or supply chain 702 can comprise one or more industrial systems 704. Systems 704 represent the production lines or productions areas within a given plant facility or across multiple facilities of a supply chain. Each system 704 is made up of a number of assets 706 representing the machines and equipment that make up the system (*e.g*., the various stages of a production line). In general, each asset 706 is made up of multiple devices 708, which can include, for example, the programmable controllers, motor drives, human-machine interfaces (HMIs), sensors, meters, *etc.* comprising the asset 706. The various data classes depicted in FIGs. 6 and 7 are only intended to be exemplary, and it is to be appreciated that any organization of industrial data classes maintained by remote support system 502 is within the scope of one or more embodiments of this disclosure.

Returning now to FIG. 6, remote support system 502 collects and maintains data from the various devices and assets that make up industrial systems 616 and classifies the data according to the aforementioned classes for the purposes of near real-time monitoring and/or on-demand technical support analysis. Device data 606 can comprise device-level information relating to the identity, configuration, and status of the respective devices comprising industrial systems 616, including but not limited to device identifiers, device statuses, current firmware versions, health and diagnostic data, device documentation, identification and relationship of neighboring devices that interact with the device, *etc.*

Process data 608 can comprise information relating to one or more processes or other automation operations carried out by the devices; *e.g*., device-level and process-level faults and alarms, process variable values (*e.g*., speeds, temperatures, pressures, *etc*.)*,* and the like.

Asset data 610 can comprise information generated collected or inferred based on data aggregated from multiple industrial devices over time, which can yield a higher asset-level views of industrial systems 616. Example asset data 610 can include performance indicators (KPIs) for the respective assets, asset-level process variables, faults, alarms, *etc.* Since asset data 610 yields a longer term view of asset characteristics relative to the device and process data, remote support system 614 can leverage asset data 610 to identify operational patterns and correlations unique to each asset, among other types of analysis.

System data 612 can comprise collected or inferred information generated based on data aggregated from multiple assets over time. System data 612 can characterize system behavior within a large system of assets, yielding a system-level view of each industrial system 616. System data 612 can also document the particular system configurations in use and industrial operations performed at each industrial system 616. For example, system data 612 can document the arrangement of assets, interconnections between devices, the product being manufactured at a given facility, an industrial process performed by the assets, a category of industry of each industrial system (*e.g*., automotive, oil and gas, food and drug, marine, textiles, *etc*.). or other relevant information. Among other functions, this data can be accessed by technical support personnel during a remote support session so that particulars of the customer's unique system and device configurations can be obtained without reliance on the customer to possess complete knowledge of their assets.

As an example, a given industrial facility can include packaging line (the system), which in turn can comprise a number of individual assets (a filler, a labeler, a capper, a palletizer, *etc*.). Each asset comprises a number of devices (controllers, variable frequency drives, HMIs, *etc.*)*.* Using an architecture similar to that depicted in FIG. 1, remote support system 502 can collect industrial data from the individual devices during operation and classify the data in a customer data store 602 according to the aforementioned classifications. Note that some data may be duplicated across more than one class. For example, a process variable classified under process data 608 may also be relevant to the asset-level view of the system represented by asset data 610. Accordingly, such process variables may be classified under both classes. Moreover, subsets of data in one classification may be derived or inferred based on data under another classification. Subsets of system data 612 that characterize certain system behaviors, for example, may be inferred based on a long-term analysis of data in the lower-level classifications.

In addition to maintaining data classes 606-612, each customer data store can also maintain a customer model 604 containing data specific to a given industrial entity or customer. Customer model 604 contains customer-specific information and preferences, which can be leveraged by remote support system 502 to determine how detected support issues should be handled. Example information maintained in customer model 604 can include a client identifier, client contact information specifying which plant personnel should be contacted in response to a technical support request (where the identified plant personnel may be dependent upon a production area or hierarchical level for which technical support is required), notification preferences specifying how plant personnel should be notified (*e.g*., email, mobile phone, text message, *etc*.), preferred technical support personnel to be contacted in the event of a detected device performance issue, service contracts that are active between the customer and the technical support entity, and other such information. Remote support system 502 can marry data collected for each customer with the customer model for identification and event handling purposes. In some embodiments, the cloud-based system can serve a custom interface to client devices of authorized plant personnel to facilitate entering or editing the customer model 804. In other embodiments, all or portions of the customer model 604 can be updated in near real-time based on data maintained on a local server on the plant facility. For example, if an engineering manager is replaced, an administrator at the plant facility may update a locally maintained employee database with the name and contact information for the new manager. The employee database may be communicatively linked to the cloud platform, such that the contact information stored in the customer model 804 is automatically updated to replace the contact information of the outgoing manager with the new employee contact information

To ensure a rich and descriptive set of data for analysis purposes, some embodiments of the cloud-based remote support system can collect device data in accordance with one or more standardized device models. To this end, a standardized device model can be developed for each industrial device. Device models profile the device data that is available to be collected and maintained by the remote support system.

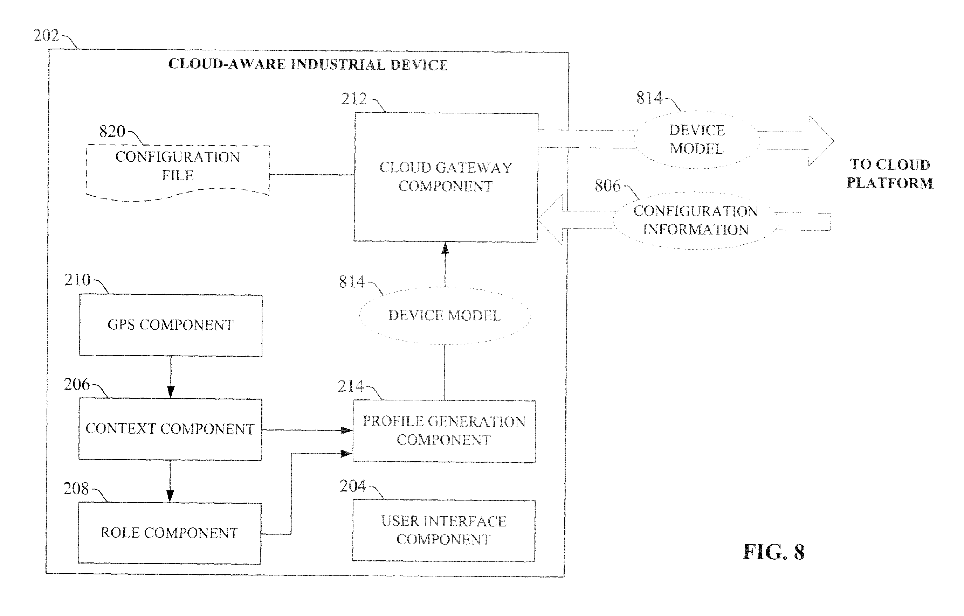

Migration of device model data to a cloud platform according to an example embodiment is now described with reference to FIG. 8 Cloud-aware industrial device 202 includes a cloud gateway component 212 configured to communicatively couple cloud-aware industrial device 202 to a cloud platform and exchange data therewith. If cloud-aware industrial device 202 is Internet-capable, cloud gateway component 212 can provide access to the cloud platform via an Internet layer. Although cloud gateway component 212 is depicted in FIG. 8 as exchanging data directly with the cloud platform, one or more embodiments of cloud gateway component 212 can be configured to exchange data with the cloud platform through a separate cloud gateway device, as described above with reference to FIGs. 3 and 4.

When cloud-aware industrial device 202 is installed as part of an industrial automation system, cloud gateway component 212 can establish communication with a specified cloud platform (*e.g*., a cloud platform allocated for use by an owner of the industrial automation system). In one or more embodiments, cloud gateway component 212 can determine an address of the cloud platform based on a configuration file 820 associated with cloud-aware industrial device 202. Configuration file 820 can specify, for example, a URL (uniform resource locator) of the cloud platform.

As part of the installation sequence, profile generation component 214 can generate a device model 814 for cloud-aware industrial device 202 to be sent to the cloud platform via cloud gateway component 212. Device model 814 can convey information about cloud-aware industrial device 202 (*e.g*., device capabilities, context within the industrial automation system, role, *etc*.) to one or more cloud-based applications or services on the cloud platform. To this end, profile generation component 214 can leverage information provided by one or more of the context component 206 or role component 208.

Context component 206 can determine a context of cloud-aware industrial device 202 within the plant or enterprise environment. For example, one or more embodiments of context component 206 can identify other devices and systems within its local environment and make a determination regarding a location of cloud-aware industrial device 202 within a hierarchical plant context or device topology. For example, some embodiments of the cloud-based remote support system may model a given industrial enterprise in terms of multiple hierarchical levels and device hierarchies, where each level comprises units of the enterprise organized as instances of types and their properties. Exemplary types can include, for example, assets (e.g., pumps, extruders, tanks, fillers, welding cells, utility meters, *etc*.), structures (*e.g*., production lines, production areas, plants, enterprises, production schedules, operators, *etc*.), and processes (*e.g*., quality audit, repairs, test/inspection, batch, product parameters, shifts, *etc*.)*.*

In some embodiments, a data class hierarchy similar to that depicted in FIG. 7 can be used as a basis for modeling an industrial enterprise. The hierarchy can also include additional levels depending on the organization of the particular industrial enterprise (*e.g*., a workcell level, a line level, an area level, a site level, an enterprise level, *etc.* The type instances described above - representing units of the enterprise - can be defined for respective levels of this hierarchical structure. Modeling an industrial enterprise in this fashion can allow devices of an automation system and their associated data to be described and identified in terms of these hierarchical levels, allowing a common terminology to be used across the entire enterprise to identify devices and their associated data. Thus, individual devices or items of data (*e.g*., live analog and digital values stored in controller tags, archived data values stored in a historian register or other long-term data storage device, *etc*.), when integrated into a framework that accords to such a hierarchical model, can be identified and viewed through using unique data tags that conform to a unified, hierarchical naming and browsing convention. For example, through adherence to a hierarchical data model, a given item of data within an industrial system can be identified with a data tag or identifier that indicates the data item's origin or context within the organizational hierarchy (*e.g*., SoCal:DieCastArea:#1 HeadlineMachine:DowntimeTracking:DowntimeMinutes). Applications and services that model an enterprise according to an organizational hierarchy can represent industrial controllers, devices, machines, or processes as data structures (*e.g*., type instances) within this organizational hierarchy to provide context for data generated and stored by devices within the enterprise relative to the enterprise as a whole. Such a convention can replace the flat name structure employed by some industrial applications.

Returning now to FIG. 8, context component 206 can gather information that facilitates locating a cloud-aware industrial device 202 within an organizational or device hierarchy in a number of ways. In one example, context component 206 can identify a topology of devices sharing a common network with cloud-aware industrial device 202 and interconnections between the devices. For example, if cloud-aware industrial device 202 is an industrial controller, context component 206 can identify one or more discrete or analog I/O devices connected to the controller. Context component 206 can also identify one or more low-level control systems that exchange data with the controller, such as vision systems, barcode marking systems, variable frequency drives, industrial robots, or the like which perform local control of portions of the industrial process, or which have their own localized control systems, but which are subservient to the industrial controller. In addition, context component 206 can identify other controllers on the network and their role within the overall industrial enterprise (*e.g*., the production areas, workcells, or processes associated with the respective controllers). In some embodiments, context component 206 can also determine an identity of a particular network (*e.g*., a network name) to which cloud-aware industrial device 202 is attached. This information can be leveraged (either by profile generation component 214 or an external application) to determine the device's location and role within the industrial automation system, since some networks may be dedicated to a particular production area. Some embodiments of context component 206 may also identify a type of machine to which cloud-aware industrial device 202 is connected (*e.g*., a palletizer, wrapper, conveyor, *etc*.).

To facilitate determining the plant context of cloud-aware industrial device 202, context component 206 may also leverage global positioning (GPS) information provided by GPS component 210. GPS component 210 can determine a geographical location of cloud-aware industrial device 202. In one or more embodiments, GPS component 210 can comprise an integrated GPS that determines the location using satellite navigation signals. In other embodiments, GPS component 210 can employ non-GPS technique to determine location (*e.g*., wireless triangulation). Location data provided by GPS component 210 can be use to determine a placement of cloud-aware industrial device 202 within the enterprise or device hierarchy. For example, based on the GPS location data, context component 206 (or a cloud-based application in receipt of device model 814) can determine that cloud-aware industrial device 202 is located at a particular plant facility, or within a particular production area of a plant. Based on this information, profile generation component 214 determines that cloud-aware industrial device 202 is associated with the particular facility and/or production area within the enterprise hierarchy.

By gathering information about the local device topology, context component 206 can facilitate identifying a location of cloud-aware industrial device 202 within the enterprise hierarchy. In some embodiments, this determination of the location within the enterprise hierarchy can be made by context component 206 itself. Alternatively, profile generation component 214 can include information gathered by context component 206 in device model 814 so that an external application (*e.g*., cloud-based remote support system) can accurately represent cloud-aware industrial device 202 within the enterprise or device hierarchy.

Role component 208 can generate information regarding a role of cloud-aware industrial device 202 within the industrial automation system. This role information can be based a type of the device (*e.g*., industrial controller, telemetry device, sensor, human-machine interface terminal, vision camera, variable frequency drive, *etc*.) combined with system-specific context information, such as information gathered by context component 206. For example, if cloud-aware industrial device 202 is an HMI terminal, and information generated by context component 206 determines that the HMI terminal is connected to an industrial controller that monitors and controls a particular batch process in a particular production area of the plant, role component 208 can determine that the role of cloud-aware industrial device 202 is to act as an operator interface for the batch process. Likewise, if cloud-aware industrial device 202 is a variable frequency drive, role component 208 can determine that the role is to control a motor within a particular production area or in connection with a batch process identified by context component 206.

Profile generation component 214 can aggregate information from one or more of the context component 206 or role component 208 into device model 814, which can then be passed to cloud gateway component 212 for delivery to the remote support system on the cloud platform (*e.g*., the cloud platform identified in configuration file 820). This information can be used by the cloud-based applications in a number of ways. For example, based on information in device model 814, a cloud-based device management application or other such service can deliver suitable configuration information 806 to cloud-aware industrial device 202 that automatically configures the device for operation within its determined environment. Configuration information 806 can, for example, instruct cloud-aware industrial device 202 which data items are to be exchanged with a disparate device in connection with monitoring and/or controlling a given industrial process. This can include automatically configuring one or more data tags within cloud-aware industrial device 202 for communication with appropriate data tags within the disparate device, thereby establishing a communicative link between the devices. Configuration information 806 can also configure one or more operating parameters of cloud-aware industrial device 202 based on information in device model 814 and information about the industrial system (*e.g*., the enterprise or device hierarchy) maintained on the cloud platform.

Cloud-aware industrial device 202 can also include user interface component 204, which receives user input data and/or renders output data to the user. Capabilities of user interface component 204 depend on the type of the industrial device. For example, user interface component 204 may be associated with a touch screen if cloud-aware industrial device 202 is an HMI terminal or a device having a touch-sensitive configuration and display screen. User interface component 204 can also allow the user to enter certain cloud-specific configuration information in connection with one or more functions described above. For example, a user may interact with user interface component 204 to set an address (*e.g*. a uniform resource locator) of the cloud platform. Users may also interact with user interface component 204 to configure whether cloud-aware industrial device 202 is allowed to push data to or pull data from the cloud platform. User interface component 204 may also render an indication that cloud-aware industrial device 202 has been successfully integrated with the system after configuration information 806 has been received and processed.

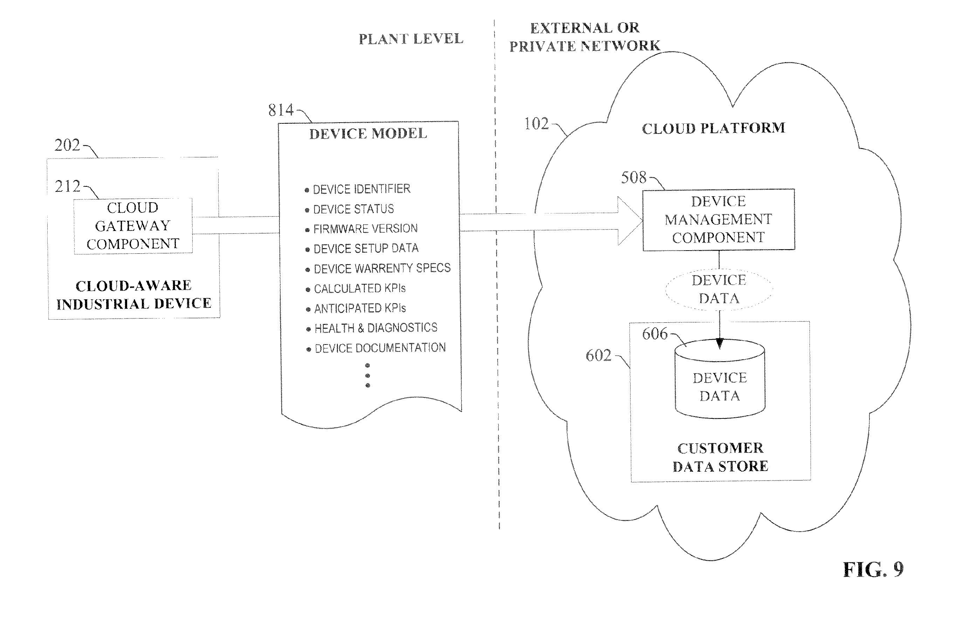

FIG. 9 illustrates an example device model according to one or more embodiments. In the illustrated example, device model 814 is associated with cloud-aware industrial device 202 (*e.g*., a programmable logic controller, a variable frequency drive, a human-machine interface, a vision camera, a barcode marking system, *etc*.). As a cloud-aware device, industrial device 202 can be configured to automatically detect and communicate with cloud platform 102 upon installation at a plant facility, simplifying integration with existing cloud-based data storage, analysis, and applications (*e.g*., the remote support system described herein). When added to an existing industrial automation system, cloud-aware industrial device 202 can communicate with the cloud platform 102 and send identification and configuration information in the form of device model 814 to the cloud platform. Device model 814 can be received by a device management component 508 of the cloud-based remote support system. The device management component 508 then updates the customer's device data 606 based on the device model 814. In this way, the remote support system can leverage the device model to integrate the new device into the greater system as a whole. This integration can include updating cloud-based applications to recognize the new device, adding the new device to a dynamically updated data model of the customer's industrial enterprise or plant, making other devices on the plant floor aware of the new device, or other such integration functions. Once deployed, some data items comprising device model 814 can be collected and monitored by the cloud-based remote support system on a near real-time basis.

In addition to the information described above in connection with FIG. 8, device model 814 can also comprise such information as a device identifier (*e.g*., model and serial number), status information for the device, a currently installed firmware version, device setup data, device warranty specifications, calculated and anticipated KPIs associated with the device (*e.g*., mean time between failures), device health and diagnostic information, device documentation, or other such parameters.

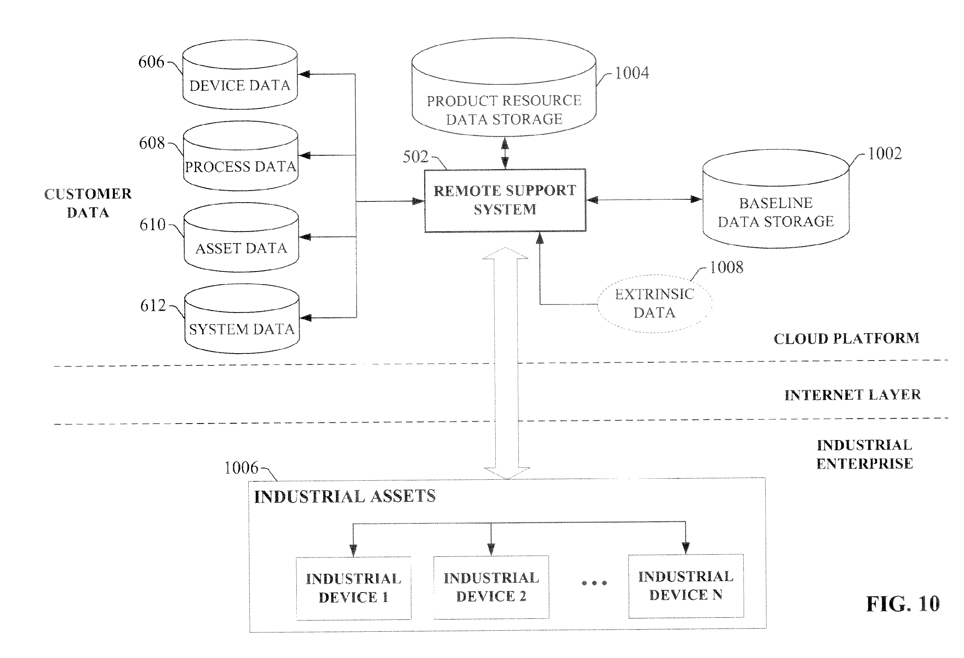

FIG. 10 illustrates a cloud-based system storage architecture for providing remote support services. As noted above, remote support system 502 can collect, maintain, and monitor customer-specific data (*e.g*. device data 606, process data 608, asset data 610, and system data 612) relating to one or more industrial assets 1006 of an industrial enterprise. In one or more embodiments, remote support system 502 can also maintain product resource information in cloud-based product resource data storage 1004. In general, product resource data storage 1004 can maintain up-to-date information relating to specific industrial devices or other vendor products. Product data stored in product resource data storage 1004 can be administered by one or more product vendors or original equipment manufacturers (OEMs). Exemplary device-specific data maintained by product resource data storage 1004 can include product serial numbers, most recent firmware revisions, preferred device configuration settings and/or software for a given type of industrial application, or other such vendor-provided information.

Additionally, one or more embodiments of cloud-based remote support system 502 can also leverage extrinsic data 1008 collected from sources external to the customer's industrial enterprise, but which may be relevant in connection with diagnosing a degradation or failure of the customer's industrial systems and devices. Example extrinsic data 1008 can include, for example, energy cost data, material cost and availability data, transportation schedule information from companies that provide product transportation services for the customer, inventory data collected from an upstream material supplier in the supply chain, market indicator data, web site traffic statistics, information relating to known information security breaches or threats, or other such information. Cloud-based remote support system 502 can retrieve extrinsic data 1008 from substantially any data source; *e.g*., servers or other data storage devices linked to the Internet, cloud-based storage that maintains extrinsic data of interest, or other sources.

One or more embodiments of remote support system 502 can also allocate a portion of cloud-based storage for baseline data storage 1002, which maintains hierarchical, multi-level baseline information for the industrial enterprise comprising industrial assets 1006. In such embodiments, remote support system 502 can analyze the collected customer data over time in order to identify data subsets associated with normal and/or optimized operation of industrial assets 1006. These identified data subsets characterize both configuration and operational aspects of the industrial system during normal operation, including but not limited to device configuration parameters (*e.g*., variable frequency drive parameters, control loop tuning parameters, software code loaded on one or more industrial controllers, *etc*.), process variables (*e.g*., setpoint values, recipe data, *etc.*), operational statistics (*e.g*., product count, cycle times, frequency of machine downtimes, *etc*.), operator interactions (*e.g*., keystrokes, sequences of manual control actions, HMI screen navigation, *etc*.), or other aspects. Once these subsets of data have been identified, remote support system 502 can store hierarchical baseline information for the industrial system in baseline data storage 1002, where the hierarchical baseline information is generated based on the identified subsets of normal operation data. As will be described in more detail below, when remote support is requested, a "snapshot" of the current device or system states (*e.g*., performance indicators, configuration parameters, or other such information) can be captured and provided to the cloud platform, where the current state information is compared with the previously recorded baselines. In this way, remote support system 502 can identify aspects of the industrial assets 1006 that have deviated from their relative baselines.

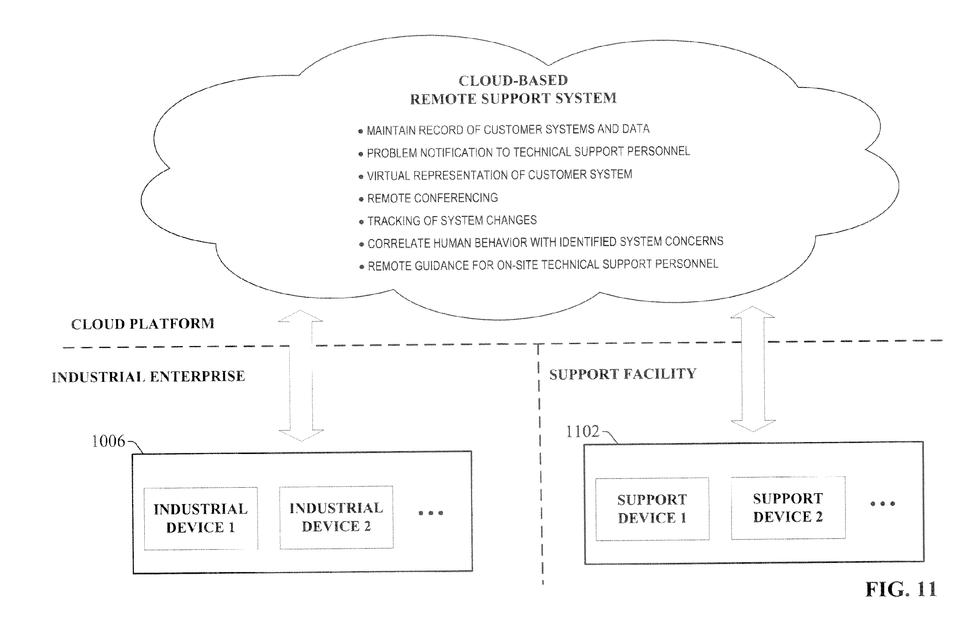

FIG. 11 illustrates a general overview of a cloud-based system that uses the data collection and monitoring tools described above to facilitate remote technical support. As will be described in more detail below, the cloud-based remote support system can maintain records of customer systems and historical operational data, which can be accessed by technical support personnel via client devices 1102. The system can also send notifications of device or asset performance issues to the support personnel via the cloud platform. Such notifications can include information relating to the nature of the problem as well as data collected from relevant industrial devices that may assist with diagnosis of the issue. In some embodiments, the remote support system can also generate a virtual representation of the customer's industrial assets or plant environment using data collected from the industrial assets 1006 and maintained in the cloud platform. The remote support system can also facilitate remote conferencing (*e.g*., video conferencing) between plant personnel and a technical support representative via the cloud platform.

To facilitate rapid diagnosis of a detected asset performance issue, the remote support system can compare hierarchical, multi-level performance or state data collected from the customer's industrial assets 1006 at the time of a detected performance issue with previously collected data (*e.g*., baseline data) indicative of normal, optimal, or approved performance of the industrial assets. As a result of these comparisons, remote support personnel can identify aspects of the customer's system that have changed relative to the baseline indicators. This can include identification of operational changes (*e.g*., machines that are experiencing longer cycle times, machine start-up sequences that are exhibiting significantly different sequence timings relative to normal operation, *etc*.), device configuration parameters that have been modified since the baselines were established, device software or firmware versions that have changed, modified work schedules, or other potentially relevant deviations.

In one or more embodiments, the remote support system can also collect and correlate human behavior data with certain desired operational outcomes. For example, the cloud-based remote support system can monitor operator interactions with a control panel or HMI associated with a particular machine by monitoring states of push buttons, position switches, HMI screen navigation states, and the like. Based on such observations over time, the system can identify correct sequences of operations associated with normal or desired operation of the machine. Using this information, the remote support system can identify deviations from the correct sequence of human interaction with the control panel or HMI resulted, which may be diagnosed by the support personnel as a possible cause of a system performance issue.

In some embodiments, the remote support system can also provide guidance and assistance to a Support representative boated on-site at the customer facility addressing a system performance issue. For example, such embodiments can allow a local support representative to access customer-specific information maintained on the cloud platform (*e.g*., customer data 606, 608, 610, and 612). The remote support system can format this data as a virtual representation of the customer's plant environment, with overlaid graphics identifying particular devices or machines that should be investigated. In this way, the system can guide the on-site support representative to the source of a particular performance concern. In an example scenario, the devices or machines of concern can be identified based on the baseline deviations described above (*e.g*., devices having one or more deviant configuration parameters or unsupported firmware versions can be flagged on the virtual representation to assist the representative in locating the device).

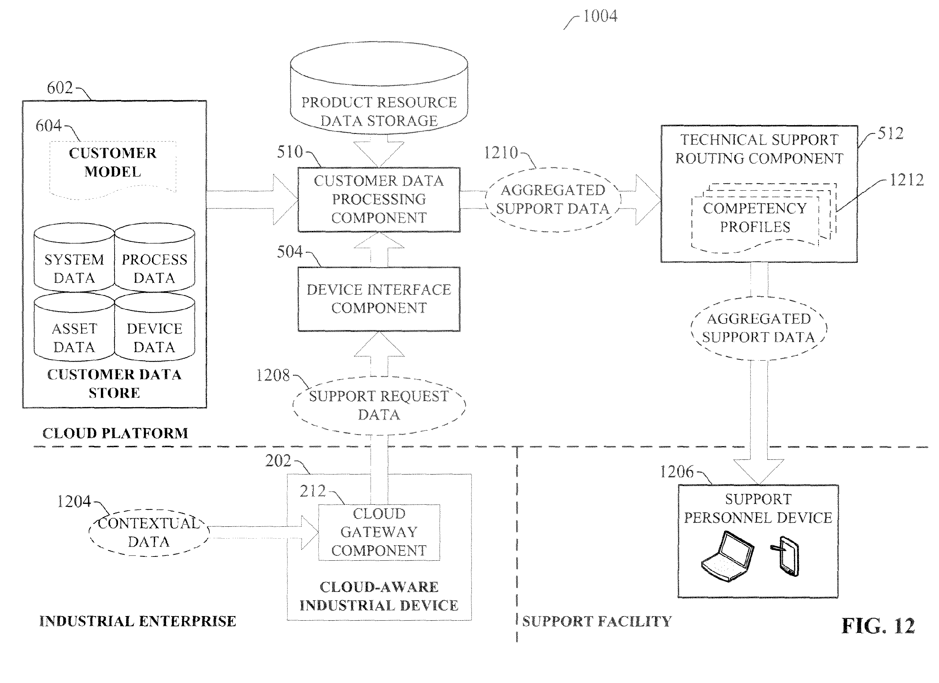

FIG. 12 illustrates an example cloud-based remote support system that automates aspects of a technical support interaction between an industrial enterprise and a remote technical support representative. As described above, the cloud-based remote support system can collect, maintain, and monitor customer-specific data (device data, process data, asset data, and system data) relating to one or more industrial assets of the industrial enterprise. The customer-specific data is maintained in customer data store 602. In this example, cloud-aware industrial device 202 may be part of a larger collection of devices that make up such an industrial asset.

The remote support system facilitates automated notification of a technical support representative in the event of a system failure, performance degradation or abnormality, or other such issue. In some embodiments, a support session can be triggered manually at the plant facility through interaction with industrial device 202. For example, industrial device 202 may be equipped with a service request button or other input device that can be pressed when assistance is desired. In addition or alternatively, industrial device 202 can initiate a request for remote assistance automatically in response to a determination that the device 202 is experiencing a failure, a degraded performance, or other potential concern.

In response to pressing the assistance button or detection of a potential operational issue requiring remote assistance, industrial device 202 generates and/or collects relevant data that may be required by a technical support representative to facilitate diagnosis of the performance issue. Such data can include, for example, information about the device itself, such as a device identifier, an event log recorded by the device, a current firmware version installed on the device, the device's current configuration parameter settings, and other such device information.

The gathered data can also include recent performance data generated or read by the device (*e.g*., long-term or short-term historical data, trend data, *etc*.). In some embodiments, initiation of the support request can cause the industrial device 202 to enter a high-speed data capture mode that captures real-time operational data relating to the device at a higher rate relative to normal operation, thereby generating more finely granulated data near the time of the event for trouble-shooting purposes.

The industrial device 202 can also collect or generate information relating to other local devices or equipment having a functional relationship with device 202. Such information can include, for example, identities of other devices or machines communicatively connected to industrial device 202, the relationship of these other devices or machines to industrial device 202, current configuration or firmware information for these other devices, *etc*.

The gathered data can also include contextual data 1204 indicative of a context at the time the button is pressed. Contextual data 1204 can include, for example, an operational status of a production line of which device 202 is a component, identities and locations of operators near the production line at the time the problem was detected, timestamp information, statuses of other devices or machines having a known relationship with device 202 at the time of the event (*e.g*., auto, semi-auto, abnormal, *etc*.), a work shift at the time of the event, a product being produced, *etc.*

In some embodiments, industrial device 202 can also collect architectural and statistical information about the plant network on which the device is deployed, including but not limited to identities of network architecture devices comprising the plant network and data traffic statistics before, during, and after the detected event or assistance request.

Once the data described above has been gathered or generated in response to initiation of the support request, industrial device 202 can send the data as to the cloud-based remote support system as support request data 1208 via cloud gateway component 212. Although FIG. 12 depicts industrial device 202 as interacting directly with the cloud platform via embedded cloud gateway component 212, in some scenarios industrial device 202 can migrate support request data 1208 via a proxy gateway device (*e.g*., another industrial device that interfaces with the cloud platform as depicted in FIG. 3, a firewall box with an embedded cloud gateway component as depicted in FIG. 4, or a stand-alone dedicated gateway device).

The support request data 1208 is received at the cloud-based remote support system (*e.g*., via device interface component 504) and provided to a customer data processing component 510, which may perform additional processing on the support request data 1208 prior to sending a request to a remote support representative. Customer data processing component 510 can perform this additional processing based on previously captured knowledge of the customer's system in customer data store 602 (*e.g*., device data 606, process data 608, asset data 610, and/or system data 612) and/or the customer model 604 associated with the customer. For example, customer data processing component 510 can glean additional customer-specific context that may assist in diagnosing the performance problem by referencing system, process, asset, and/or device data stored in the customer data store 602. Such context may include additional information about the devices and/or machines with which the industrial device 202 interacts (*e.g*., identities of such devices, as well as their role in the overall industrial system and their functional relationship to industrial device 202 in particular), other upstream or downstream processes whose operation may have an impact on operation of the industrial device 202, *etc.*

Customer data processing component 510 can also compare all or portions of support request data 1208 relating to performance of industrial device 202 at the time of the event with corresponding sets of historical performance data for device 202 stored in customer data store 602. Based on these comparisons, customer data processing component 510 can identify performance metrics that deviated from normal or preferred operation before, during, and after the detected event so that such deviations can be identified to the remote support representative. Such comparisons can be relative to previously established baseline metrics, as will be described in more detail below. In addition, since support request data 1208 may include collected performance data from other devices or machines that have a functional relationship with industrial device 202, customer data processing component 510 can also compare performance metrics for these other devices at the time of the detected event with previously collected performance data for these devices. Such analysis can provide insight into possible root causes of the detected performance issue that are external to the industrial device 202 itself. For example, based on such analysis, customer data processing component 510 may determine that an abnormality of an upstream machine or process is a possible root cause of the performance issue detected at industrial device 202.

In one or more embodiments, customer data processing component 1108 can also analyze support request data 1208 in view of product data maintained in product resource data storage 1004 to yield additional information that may be relevant to diagnosis of the performance issue. For example, customer data processing component 510 may cross-reference device identifiers for industrial device 202 and related devices with product resource data storage 1004 to determine whether the firmware versions currently installed on the devices are up-to-date. As noted above, product resource data storage 1004 can include vendor-provided product information regarding current firmware versions, software versions, hardware versions, *etc*. Accordingly, customer data processing component 510 can retrieve product resource data for the devices identified by the support request data 1208, compare the firmware version number retrieved from device data 606 with the most recent firmware version number indicated by the product resource data, and make a determination regarding whether the on-premises devices are using the most recent firmware version.

In another example, a device vendor may report a known compatibility issue with their device, a discovered performance issue with their device when a particular firmware version is installed, or other known problems with their device. Accordingly, customer data processing component 510 can access product resource data storage 1004 to determine whether there are known vendor-reported issues with industrial device 202 or related devices identified by support request data 1208. This information can also be reported to the remote support representative to facilitate rapid and accurate diagnosis.

Once preliminary processing of support request data 1208 has been completed (based on customer data maintained in customer data sore 602 and product resource data maintained in product resource data storage 1004), customer data processing component 510 can package the processed data - including support request data 1208 and any additional data generated through the analyses described above - as aggregated support data 1210, which is then provided to technical support routing component 512. Technical support routing component 512 is configured to determine a suitable technical support representative to assist the customer in diagnosing the reported issue. In some embodiments, based on examination of aggregated support data 1210, technical support routing component 512 can determine an area of expertise or competency required to diagnose the issue, based on such factors as the particular industrial devices or device types that are involved, the industry in which the industrial device is being used (*e.g*., automotive, pharmaceutical, oil and gas, food and drug, plastics, textiles, *etc.,* as identified by customer model 604), or other such considerations.

Technical support routing component 512 can then reference a set of stored competency profiles 1212 to determine a suitable remote support representative or department to assist the customer in addressing the performance concern. Competency profiles 1212 can be associated with respective technical support individuals or departments, and store information specifying areas of expertise for the respective individuals/departments. An example competency profile 1212 for a given technical support representative can include a list of devices or device types that the representative is competent to diagnose, the representative's industries of expertise, types of industrial applications in which the representative has experience, or other relevant data that can be used by the system to match a suitable representative to the reported issue. In an example scenario, if the reported issue relates to a motor drive failure, technical support routing component 512 can determine the type of motor drive based on examination of aggregated support data 1210 and match the issue to a competency profile associated with a motor drives department of a remote technical support facility. In some embodiments, selection of an appropriate support representative can also be based on customer preferences maintained in customer model 604, which may specify one or more support representatives preferred by the customer.

Technical support routing component 512 can then route the aggregated support data to the technical support representative or department whose profile matches the reported issue. This can involve sending a notification, together with all or portions of aggregated support data 1210, to one or more client devices 1206 associated with the selected support representative or department. The rich set of data contained in aggregated support data 1210 can quickly convey the nature of the problem to the technical support representative via the client device 1206 without requiring the customer to have extensive knowledge of their own system. Moreover, the additional customer-specific information maintained in customer data store 602 can be accessed by the customer support representative via the cloud platform so that additional knowledge of the customer's system can be obtained if necessary.

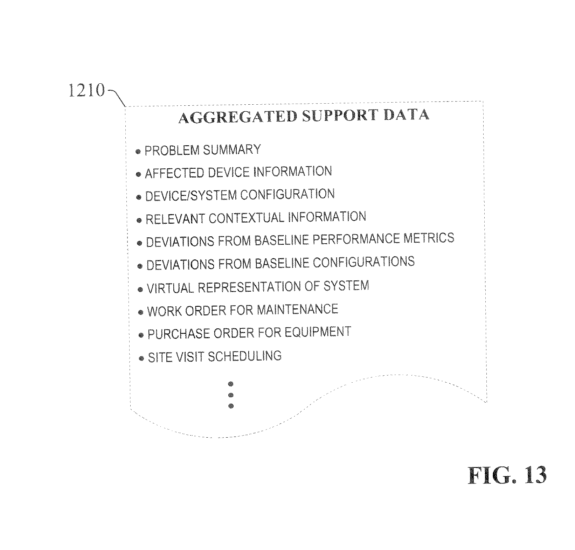

Aggregated support data 1210 can comprise a variety of information to assist the remote support representative with diagnosis, as illustrated in FIG. 13. For example, aggregated support data 1210 can include a summary of the detected problem and an identification of the affected device. Since the reported device failure or performance degradation can be a function of the behavior of other related devices or assets, aggregated support data can also include system configuration information describing the system of which the affected device is a component. This can include identification of related devices or machines, the relationship of these other devices or machines to the affected device, information that is shared between the devices, how the various devices are networked (including identities and locations of network architecture devices used to network the system), and other such system configuration information. Relevant contextual information (*e.g*., a location of the affected device within a the overall enterprise or plant hierarchy, timestamp data, quality indicators, machine or process states, identification and locations of plant personnel at the time of the detected event, *etc.*) can also be provided via aggregated support data 1210.

Aggregated support data 1210 can also identify system deviations from baseline performance metrics and configurations. In this regard, customer data processing component 510 can compare the performance and device configuration data provided by industrial device 202 with corresponding baseline performance metrics and device configuration data maintained in customer data store 602 in order to identify aspects of the customer's system (*e.g*., performance indicators, configuration parameters, software versions, *etc*.) that have deviated from their baseline values. These deviant aspects can be identified to the customer support representative as being potentially relevant to diagnosis of the reported issue. These aspects will be described in more detail below.

In some embodiments, aggregated support data 1210 can provide the remote service representative with a virtual representation of the customer's system based on the customer data maintained on the cloud platform. This virtual representation can leverage any suitable customer data (*e.g*., device, process, asset, and/or system data) to construct a virtual representation of the customer's production area, plant, or other subset of the industrial enterprise. In an example scenario, the virtual representation can comprise a three-dimensional representation that can be navigated by the customer service representative, where the representation includes graphical representations of the customer's devices and assets. These graphical device representations can be located and oriented with respect to one another to simulate their respective locations in the plant, thereby allowing the customer support representative to explore the customer's system in a manner that simulates their presence on the plant floor. The remote support system can overlay graphical indicators on particular areas of the customer's industrial system (*e.g*., devices, production areas, *etc*.) that may be experiencing a performance issue, or that may be a cause of an issue detected at another part of the plant. These indicators can be based, for example, on the baseline deviations described above.

Depending on the active service contract between the customer and the technical support entity, aggregated support data 1210 may include an automatically generated work order for maintenance or a purchase order for equipment based on the nature of the detected issue. For example, if the remote support system diagnoses the detected performance issue as one that requires an on-site support visit or a replacement device, customer data processing component 510 can automatically generate the necessary work order or purchase order for delivery to the technical support entity. In the event that an on-site visit is deemed necessary, the system may also automatically schedule the on-site visit. In this regard, the remote support system can, for example, access an on-site scheduling system maintained by the customer support entity (either locally at the support facility or on the cloud platform) to determine available times and technicians.

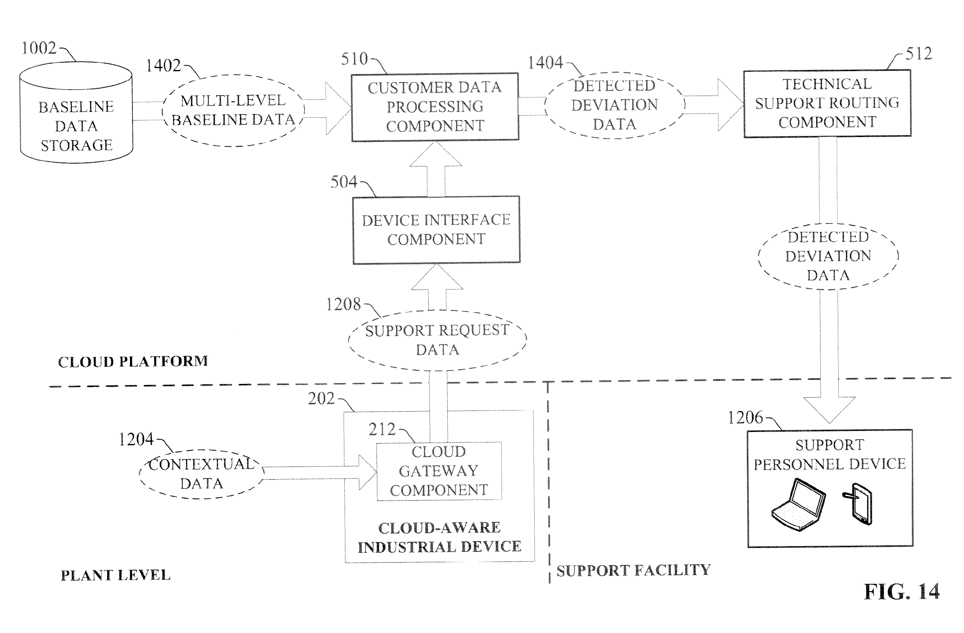

As noted above, some embodiments of the cloud-based remote support system can diagnose a customer's industrial system based in part on determined deviations from desirable baseline behavior. FIG. 14 illustrates the use of hierarchical, multi-level baselines to detect such deviations from normal, optimal, or preferred performance. As noted above, the cloud-based storage architecture can include baseline data storage 1002, which can store highly granular baseline metrics for various hierarchical aspects of the customer's industrial enterprise. For example, a baseline analysis component (not shown) can analyze the customer data collected and stored in customer data store 602 over time until achieving a degree of confidence that data characteristics of a normal or optimal production run of the customer's industrial system can be recognized. Once the data characteristics of a normal production run have been identified, the baseline analysis component can generate a set of multi-level baseline data based on these data characteristics for storage in baseline data storage 1002. The baseline data can comprise a set of benchmarks for comparison, where the benchmarks correspond to aspects of the customer's industrial system across multiple hierarchical levels. The baseline data characterizes the context of a normal or optimal production run of the industrial system at a high degree of granularity, from the highest levels (*e.g*., plant or supply chain characteristics, production line or production area characteristics, *etc*.) to the lowest levels (*e.g*., asset KPIs, process variables, device configurations, firmware revisions, *etc*.). The baseline data can subsequently be used as a benchmark for comparison when operational issues arise or when product quality metrics deviate from acceptable tolerances, as will be discussed in more detail below.

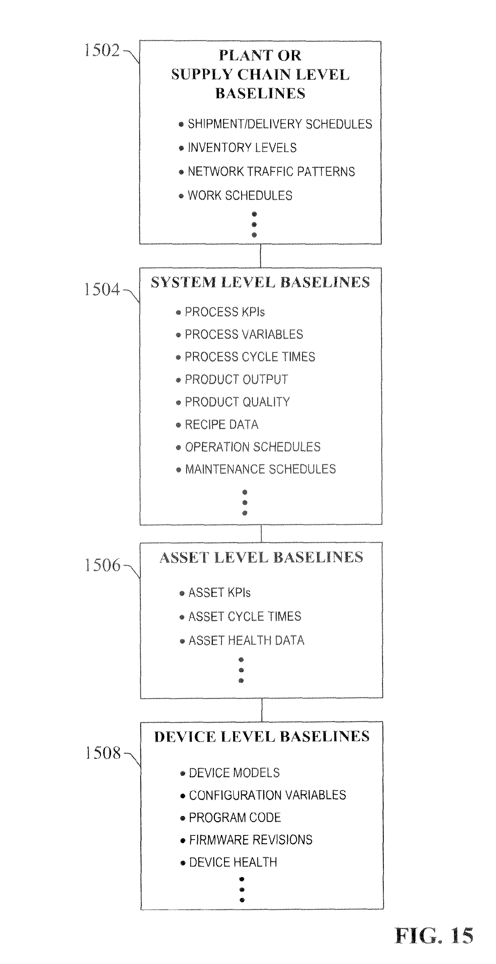

Any suitable technique can be used to generate baseline data from the identified subsets of customer data associated with a good production run. For example, in one or more embodiments, baseline data can comprise hash values generated from the identified sets of customer data using any appropriate hash value calculation algorithm. In such embodiments, the baseline analysis component can generate multiple, focused hash values corresponding to multi-level, highly granular aspects of the customer's system. FIG. 15 illustrates example hierarchical system aspects for which baselines (*e.g*. hash values or other comparison metric) can be calculated by the baseline analysis component. At the device level 1508, a hash value (or other baseline metric) can be generated based on the configuration parameters set for a particular industrial device during successful production run, the device model, the firmware version of the device, software code (*e.g*., ladder logic program) executing on the device, device health information (*e.g*., device faults, abnormals, *etc*.), or other such device level metrics. At the asset level 1506 (representing a collection of devices for performing a portion of a process), hash values can be generated based on asset KPIs measured during a successful run, asset cycle times, asset health information, *etc*. At the system level 1504 (representing a collection of assets that perform an industrial application; *e.g*., a production line), hash values can be generated based on the process variables or setpoints used during a successful production run, process KPIs measured during a successful run, desired product output, quality measurements collected for a successful run, process health metrics (*e.g*., production line downtime occurrences, *etc.*), production line cycle times, recipe data, operation schedules, maintenance schedules, *etc.* At the plant or supply chain level 1502, hash values can be generated based on work schedule data, part or ingredient delivery schedules, order information, inventory data, plant network traffic patterns or network loading during normal plant operation, *etc.*

In addition to the metrics described above, one or more embodiments of the baseline analysis component can also track and learn human behaviors that are conducive to proper operation of the customer's industrial systems. For example, the cloud-based remote support system may be configured to infer operator interactions with certain industrial assets by monitoring keystrokes, mouse movements, HMI screen navigations and/or inputs, order and timing of manual control panel operations (determined, for example, by monitoring the states of the control panel's selector switches and push buttons), operator movements through the production area or plant (*e.g*., by tracking a personal device carried by the operator), *etc*. As in previous examples, based on analysis of the collected customer data - including human behavior data - over time, the baseline analysis component can learn associations between certain sequences of operator interactions and proper system behavior or performance. Based on these learned associations, the baseline analysis component can record these interactions in cloud storage and/or generate a baseline metric based on these preferred operator interactions for subsequent comparative purposes.

Although the examples described above describe the hierarchical baselines a being determined based on analysis of collected operational data over time to determine conditions that result in best performance, some embodiments may allow the user to manually initiate baseline capture. For example, the customer may observe that their industrial system is operating in a desired manner, and wish to obtain a "snapshot" of the current performance metrics, device configuration settings, *etc.* so that deviations from the current system state can be tracked and identified. In another example, baseline capture may be initiated automatically in response to a determination (by industrial device 202 or by the cloud-based remote support system) that a defined system condition has been achieved. This can include, for example, specifying that a baseline snapshot should be captured in response to a determination that a desired cycle time, product throughput, or energy efficiency has been achieved.

Returning now to FIG. 14, once a set of hierarchical, multi-level baselines for the customer's industrial systems has been established and stored in baseline data storage 1002, the cloud-based remote support system can use the baselines to assist the customer or a remote support representative in identifying possible root causes of a detected system inefficiency or failure. For example, customer data processing component 510 can identify deviations from ideal system operation at a high degree of granularity. In one or more embodiments, the cloud-based remote support system can search for such deviations on demand; *e.g*., in response to a request for support as described in previous examples. On-demand analysis may be appropriate, for example, if a device or system failure or inefficiency has been observed. In such scenarios, plant personnel can initiate a support request by pressing a service request button on industrial device 202. Alternatively, the support request may be initiated automatically by the industrial device 202 in response to detection of a device failure (*e.g*., a failure of the industrial device 202 itself or a failure of another device in communication with industrial device 202), a performance degradation (*e.g*., a value of a performance indicator that has fallen outside defined tolerances), other such potential concerns.

In response to the support request, industrial device 202 prepares support request data 1208 as described above in connection with FIG. 12, and sends the support request data 1208 to the cloud-based remote support system via device interface component 504. Customer data processing component 510 receives support request data 1208, and accesses baseline data storage 1002 to compare current values of performance indicators, device configuration parameters, *etc*. reported by the support request data 1208 with multi-level baseline data maintained in baseline data storage 1002 in order to identify where and how the customer's industrial system has changed subsequent to creation of the baselines.

For example, if the baseline data has been generated in the form of hash values as described above, customer data processing component 510 can generate new hash values based on support request data 1208, where the new hash values correspond to the system aspects (*e.g*., device configurations, KPIs, device programming, network loading, *etc*.) for which the baseline hash values were created. In this regard, customer data processing component 510 can identify subsets of support request data 1208 corresponding to the system aspects for which the baseline values were created, and generate new hash values based on the identified subsets using the same hash algorithms used to create the baseline hash values. Customer data processing component 510 can compare the new hash values to the baseline hash values, and deviations between corresponding new and baseline hash values can be used to identify aspects of the customer's industrial system that have changed relative to optimal baseline operation. For example, if a new hash value corresponding to a motor drive configuration is found to deviate from its corresponding baseline hash value, customer data processing component 510 can flag the motor drive configuration as a possible root cause of an identified system performance degradation (*e.g*., a longer cycle time, an increase in downtime frequency or duration, *etc.*).

Based on such analysis, customer data processing component 510 can report identified deviations in the form of detected deviation data 1404. Using techniques described above, detected deviation data 1404 can report deviations across multiple levels of the industrial system, including but not limited to deviations from optimal or preferred system operation, device configuration changes, changes in device firmware versions, incorrect human operations (*e.g*., improper interaction with a machine control panel, incorrect manual control sequences. *etc*.), product quality degradations, abnormal plant network traffic or loading, changes in supply chain dynamics (*e.g*., delayed product or part delivery schedules, changes in inventory levels, *etc*.), changes in work schedules, changes in resource utilization, or other such system changes that may be a root cause of overall system performance failures, degradations, or inefficiencies. The remote support system can then provide the detected deviation data 1404 to technical support routing component 512, which routes the service request and the data to an appropriate customer support representative, as described above in connection with FIG. 12. Detected deviation data 1404 can be provided to the customer support representative in addition to, or as part of, aggregated support data 1210.

In addition to the diagnosis and information routing aspects described above, some embodiments of the cloud-based remote support system can also include tools that facilitate live conferencing between the customer support representative and the customer via the cloud platform. For example, in response to initiation of a support request (*e.g*., by pressing the service request button on an industrial device, or automatically based on detection of a potential device failure or performance degradation), the remote support system can notify a remote technical support representative of the issue as described in previous examples. In addition, the remote support system can provide the support representative with identity and contact information for the responsible plant employee who should be contacted in the event of a maintenance concern. The system can identify the suitable employee based on such factors as the type of issue to be addressed, an affected production area, or other such considerations. The type of the detected concern can be cross-referenced with contact information maintained in the customer model 604 to identity which plant employee should be contacted. For example, the customer model 604 may indicate that device-level issues (*e.g*., firmware upgrades, device configuration modifications, device replacements, *etc.*) should be directed to a particular member of the maintenance staff, network-related issues should be directed to a member of the information technology staff, and system-level performance issues (*e.g*., excessively long cycle times, low product throughput, high energy consumption, *etc*.) should be directed to a shift manager. The determination of which employee should be contacted can also be a function of the current work shift, since each role is handled by a different individual for each shift.

When the appropriate contact person at the plant facility has been identified, the remote support system can facilitate communication using one or more methods. In some embodiments, the system may provide the contact information for the identified employee to the support representative, allowing the representative to contact the employee directly (*e.g*., via a phone or other personal client device belonging to the employee). In addition or alternatively, the remote support system can automatically establish a communication channel between the support representative's personal device (*e.g*., desktop computer, laptop, tablet, mobile device, *etc.*) and the employee's personal client device. This may involve initiating a phone call to the employee's device, or establishing a video conference between the employee and the support representative via the cloud platform.

In another example scenario, the remote support system may not establish a direct communication link between the support representative and the responsible plant employee. Instead, the remote support system may notify the support representative of the issue, and, in parallel, send an automated notification to the plant employee's client device indicating that the identified problem has been routed to a remote support technician. In such scenarios, the automated notification may include information about the discovered issue (including all or portions of aggregated support data 1210 or detected deviation data 1404), an identification of the support representative assigned to the issue, or other such information. The remote support system may also send periodic automated updates to the customer's client device relating to progress made toward solving the identified problem, thereby allowing the customer to monitor progress from any location.

Some embodiments of the cloud-based remote support system can also include tools that allow a plant employee to send supplemental information about a reported issue to the technical support representative. Since the remote support system creates a unique issue identifier for each reported issue, a user at the plant facility can generate supplemental information about the problem and upload this additional information to the cloud platform in association with the issue identifier. For example, the customer may decide that the photographs or video of an affected machine or device may assist the support representative in diagnosing the cause of a performance issue. In this scenario, the customer can take a photograph or video footage of the relevant machine or device, establish a login session with the cloud-based support system, and upload the photograph or video to the remote support system in association with the open issue identifier. In response to receiving the photograph or video, the technical support routing component 512 can deliver the photograph or video to the personal client device associate with the relevant support technician.

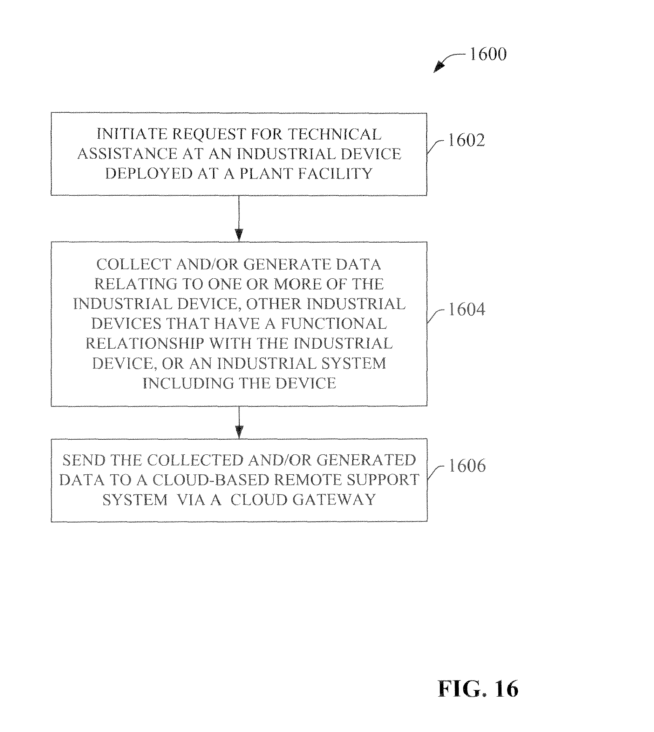

FIGs 16-18 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 16 illustrates an example methodology 1600 for collecting relevant diagnostic data from an industrial system and sending the diagnostic data to a cloud-based remote support service. Initially, at 1602, a request for technical assistance is initiated at an industrial device deployed at a plant facility. The request can be initiated manually be pressing a support request button on the industrial device, or can be initiated automatically in response to detection of a possible need for technical assistance by the device. In the latter scenario, the device can initiate the technical assistance when certain defined criteria indicative of a performance problem are satisfied. Such criteria can include, for example, an alarm condition, a performance metric (*e.g*., a cycle time, a product throughput, energy consumption, *etc*.) falling outside a defined acceptable range, or other such condition.

At 1604, data relating to one or more of the industrial device, other related industrial devices communicatively coupled to the industrial device, or an industrial system that includes the industrial device is collected and/or generated by the industrial device. The data can include, for example, a device identifier, an event log recorded by the device, a current firmware version installed on the device, the device's current configuration parameter settings, or other information relating to the device and its behavior. The data can also include identifies of other devices or machines communicatively connected to the industrial device, the relationship of these other devices or machines to the industrial device, current configuration or firmware information for these other devices, *etc.* The industrial device can also gather contextual data that may provide useful context for understanding the detected issue, including but not limited to, an operational status of a production line that includes the industrial device, identities and locations of operators near the production line at the time the problem was detected, timestamp information, statuses of other devices or machines having a known relationship with the device at the time of the event (*e.g*., auto, semi-auto, abnormal, *etc.*), a work shift at the time of the event, a product being produced, *etc*. The context data may also include architectural and statistical information about the plant network on which the device is deployed, including but not limited to network architecture devices comprising the plant network and data traffic statistics before, during, and after the detected event or assistance request.

At 1606, the data collected and/or generated at step 1604 is sent to a cloud-based remote support system via a cloud gateway. The remote support system can perform additional processing on the data and route the data to a remote customer support representative together with a notification of the support request.

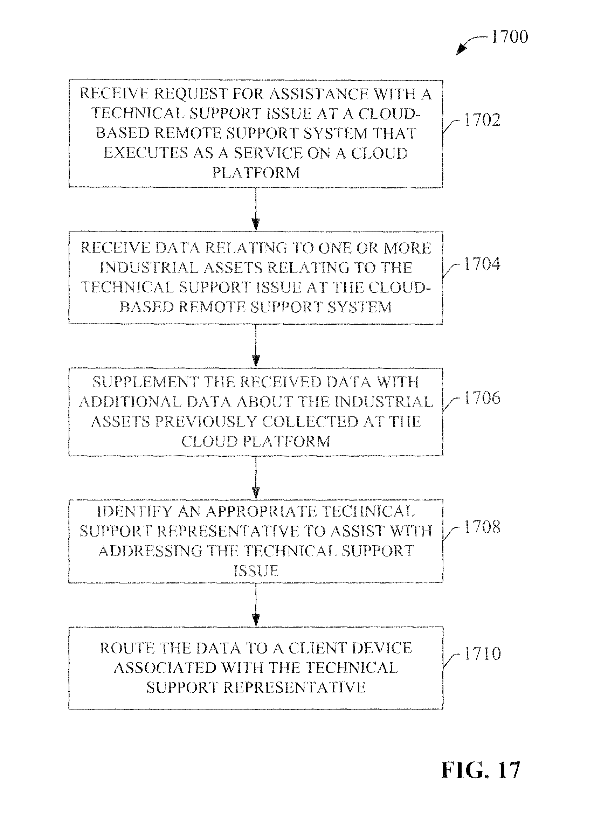

FIG. 17 illustrates an example methodology 1700 for processing and routing a request for technical support for an industrial system. Initially, at 1702, a request for assistance with a technical support issue is received at a cloud-based remote support system that executes as a service on a cloud platform. In some scenarios, the request can be received from an industrial device that is communicatively connected to the cloud platform via a cloud gateway component. At 1704, data relating to one or more industrial assets is received at the cloud-based remote support system, the data relating to the technical support issue. The data can include information similar to the information described above in connection with step 1604 of FIG. 16.

At 1706, the received data is supplemented with additional data about the industrial assets previously collected at the cloud platform. The can include, for example, supplementing the data received at step 1704 with additional information about the particular configuration of industrial assets that comprise the customer's industrial system. Such information can be monitored and maintained on cloud storage by the cloud-based remote support system. In another example, the data can be supplemented by comparing current state information for various hierarchical aspects of the industrial assets with previously recorded desired baseline states captured for the assets.

At 1708, an appropriate technical support representative for assisting with addressing the technical support issue is identified by the cloud-based remote support system. The system can make this selection, for example, by cross-referencing a type of technical support issue with a set of competency profiles associated with respective technical support representatives, and selecting a suitable profile based on the nature of the problem. At 1710, the data received at step 1704 and supplemented at step 1706 is routed to a client device associated with the technical support representative selected at step 1706.

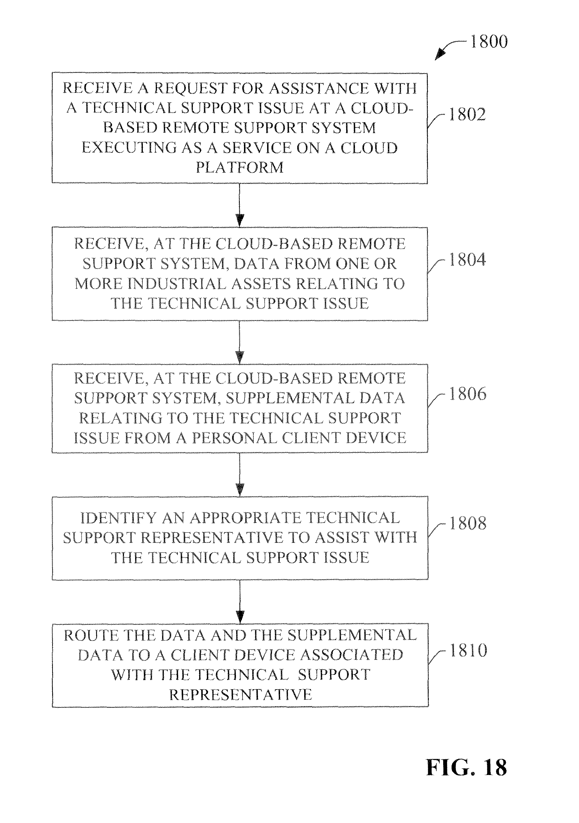

FIG. 18 illustrates an example methodology 1800 for providing information relating to a technical support issue to a technical support representative via a cloud platform. Initially, at 1802, a request for technical support is received at a cloud-based remote support system that executes as a service on a cloud platform. At 1804, data from one or more industrial assets relating to the technical support issue is received at the cloud-based remote support system. This data can comprise information similar to that described above in connection with step 1604 of FIG. 16 and elsewhere in this disclosure.

At 1806, supplemental data relating to the technical support issue is received at the cloud-based remote support system from a personal client device. The device can comprise, for example, a mobile phone or other personal device carried by a maintenance or engineering employee at the plant facility. The supplemental data can include, but is not limited to, photographs or video of a machine or device affected by the technical support issue. In some embodiments, the user of the client device can associate a technical support issue identifier with the supplemental data prior to sending the supplemental data to the cloud platform, where the issue identifier uniquely identifies the technical support request received at step 1802.

At 1808, an appropriate technical support representative for assisting with the technical support issue is identified by the cloud-based remote support system. At 1810, the data and the supplemental data is routed to a client device associated with the technical support representative identified at step 1808.

Embodiments, systems, and components described herein, as well as industrial control systems and industrial automation environments in which various aspects set forth in the subject specification can be carried out, can include computer or network components such as servers, clients, programmable logic controllers (PLCs), automation controllers, communications modules, mobile computers, wireless components, control components and so forth which are capable of interacting across a network. Computers and servers include one or more processors-electronic integrated circuits that perform logic operations employing electric signals-contigured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate via the network, which includes control, automation, and/or public networks. The PLC or automation controller can also communicate to and control various other devices such as I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

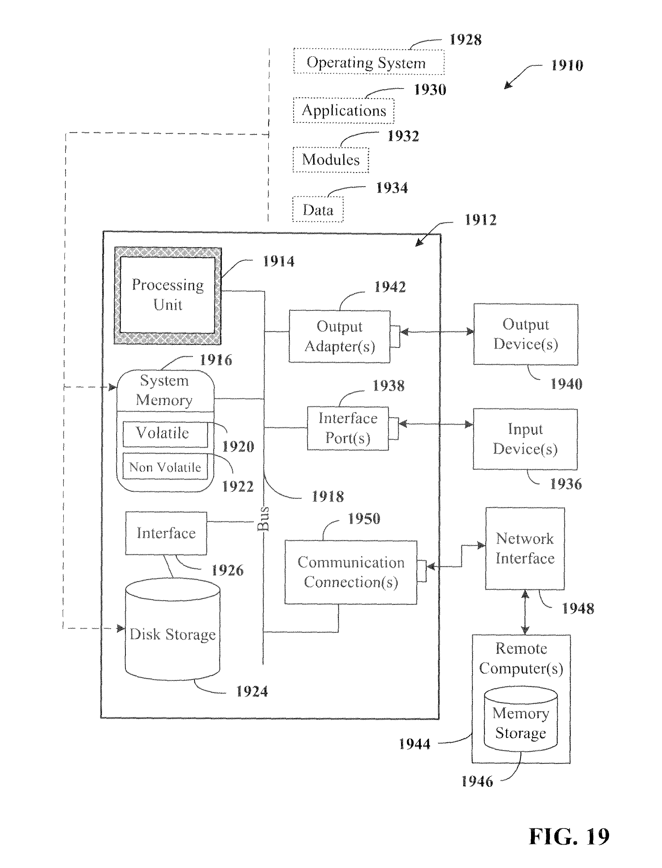

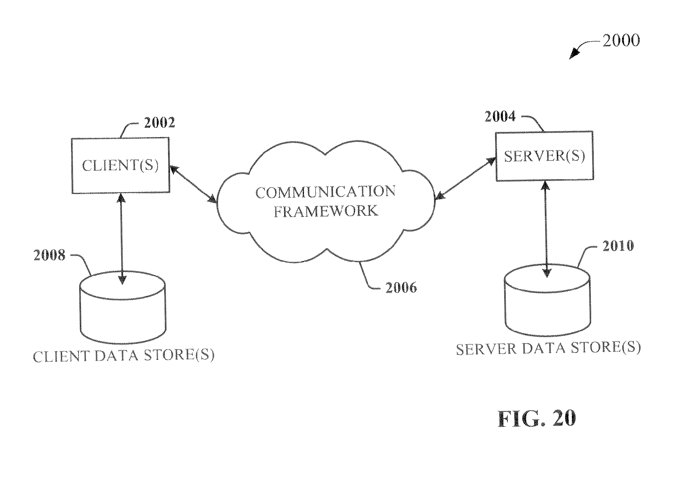

In order to provide a context for the various aspects of the disclosed subject matter, FIGs. 19 and 20 as well as the following discussion are intended to provide a brief, general description of a suitable environment in which the various aspects of the disclosed subject matter may be implemented.

With reference to FIG. 19, an example environment 1910 for implementing various aspects of the aforementioned subject matter includes a computer 1912. The computer 1912 includes a processing unit 1914, a system memory 1916, and a system bus 1918. The system bus 1918 couples system components including, but not limited to, the system memory 1916 to the processing unit 1914. The processing unit 1914 can be any of various available processors. Multi-core microprocessors and other multiprocessor architectures also can be employed as the processing unit 1914.

The system bus 1918 can be any of several types of bus structure(s) including the memory bus or memory controller, a peripheral bus or external bus, and/or a local bus using any variety of available bus architectures including, but not limited to. 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1916 includes volatile memory 1920 and nonvolatile memory 1922. The basic input/output system (BIOS), containing the basic routines to transfer information between elements within the computer 1912, such as during start-up, is stored in nonvolatile memory 1922. By way of illustration, and not limitation, nonvolatile memory 1922 can include read only memory (ROM), programmable ROM (PROM), electrically programmable ROM (EPROM), electrically erasable PROM (EEPROM), or flash memory. Volatile memory 1920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1912 also includes removable/non-removable, volatile/nonvolatile computer storage media. FIG. 19 illustrates, for example a disk storage 1924. Disk storage 1924 includes, but is not limited to, devices like a magnetic disk drive, floppy disk drive, tape drive, Jaz drive, Zip drive, LS-100 drive, flash memory card, or memory stick. In addition, disk storage 1924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1924 to the system bus 1918, a removable or non-removable interface is typically used such as interface 1926.

It is to be appreciated that FIG. 19 describes software that acts as an intermediary between users and the basic computer resources described in suitable operating environment 1910. Such software includes an operating system 1928. Operating system 1928, which can be stored on disk storage 1924, acts to control and allocate resources of the computer 1912. System applications 1930 take advantage of the management of resources by operating system 1928 through program modules 1932 and program data 1934 stored either in system memory 1916 or on disk storage 1924. It is to be appreciated that one or more embodiments of the subject disclosure can be implemented with various operating systems or combinations of operating systems.

A user enters commands or information into the computer 1912 through input device(s) 1936. Input devices 1936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1914 through the system bus 1918 via interface port(s) 1938. Interface port(s) 1938 include, for example, a serial port, a parallel port, a game port, and a universal serial bus (USB). Output device(s) 1940 use some of the same type of ports as input device(s) 1936. Thus, for example, a USB port may be used to provide input to computer 1912, and to output information from computer 1912 to an output device 1940. Output adapters 1942 are provided to illustrate that there are some output devices 1940 like monitors, speakers, and printers, among other output devices 1940, which require special adapters. The output adapters 1942 include, by way of illustration and not limitation, video and sound cards that provide a means of connection between the output device 1940 and the system bus 1918. It should be noted that other devices and/or systems of devices provide both input and output capabilities such as remote computer(s) 1944.

Computer 1912 can operate in a networked environment using logical connections to one or more remote computers, such as remote computer(s) 1944. The remote computer(s) 1944 can be a personal computer, a server, a router, a network PC, a workstation, a microprocessor based appliance, a peer device or other common network node and the like, and typically includes many or all of the elements described relative to computer 1912. For purposes of brevity, only a memory storage device 1946 is illustrated with remote computer(s) 1944. Remote computer(s) 1944 is logically connected to computer 1912 through a network interface 1948 and then physically connected *via* communication connection 1950. Network interface 1948 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1950 refers to the hardware/software employed to connect the network interface 1948 to the system bus 1918. While communication connection 1950 is shown for illustrative clarity inside computer 1912, it can also be external to computer 1912. The hardware/software necessary for connection to the network interface 1948 includes, for exemplary purposes only, internal and external technologies such as, modems including regular telephone grade modems, cable modems and DSL modems, ISDN adapters, and Ethernet cards.

FIG. 20 is a schematic block diagram of a sample computing environment 2000 with which the disclosed subject matter can interact. The sample computing environment 2000 includes one or more client(s) 2002. The client(s) 2002 can be hardware and/or software (*e.g*., threads, processes, computing devices). The sample computing environment 2000 also includes one or more server(s) 2004. The server(s) 2004 can also be hardware and/or software (*e.g*., threads, processes, computing devices). The servers 2004 can house threads to perform transformations by employing one or more embodiments as described herein, for example. One possible communication between a client 2002 and servers 2004 can be in the form of a data packet adapted to be transmitted between two or more computer processes. The sample computing environment 2000 includes a communication framework 2006 that can be employed to facilitate communications between the client(s) 2002 and the server(s) 2004. The client(s) 2002 are operably connected to one or more client data store(s) 2008 that can be employed to store information local to the client(s) 2002. Similarly, the server(s) 2004 are operably connected to one or more server data store(s) 2010 that can be employed to store information local to the servers 2004.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g*., hard disk, floppy disk, magnetic strips...), optical disks [*e.g*., compact disk (CD), digital versatile disk (DVD)...], smart cards, and flash memory devices (*e.g*., card, stick, key drive...).

### The following is a list of further preferred embodiments of the invention:

Embodiment 1. A system that facilitates remote technical assistance for industrial assets, comprising:
   a memory that stores computer-executable components;
   a processor, operatively coupled to the memory, that executes computer-executable components, the computer-executable components comprising:
      a device interface component configured to receive support request data from an industrial device via a cloud platform, wherein the support request data relates to a technical support issue; and
      a technical support routing component configured to deliver the support request data to a client device associated with a technical support entity via the cloud platform in response to receipt of the support request data.
Embodiment 2. The system of embodiment 1, wherein the support request data comprises at least one of a device identifier of the industrial device, an event log recorded by the industrial device, a current firmware version installed on the industrial device, one or more configuration parameter settings of the industrial device, performance data generated or collected by the industrial device, information relating to one or more other industrial devices that interact with the industrial device, network architecture information describing an architecture of a network on which the industrial device resides, or a network traffic statistic for the network.
Embodiment 3. The system of embodiment 1, wherein the technical support routing component is further configured to select the technical support entity based on a comparison of a characteristic of the technical support issue with one or more competency profiles describing areas of expertise for respective technical support entities.
Embodiment 4. The system of embodiment 1, further comprising a customer data processing component configured to add supplemental data to the support request data based on previously collected customer data maintained on cloud storage of the cloud platform.
Embodiment 5. The system of embodiment 4, wherein the customer data comprises at least one of identification of industrial devices comprising one or more industrial assets, configuration information for the industrial devices, relationships between the industrial devices, an industrial application performed by the industrial devices, historical performance data for the industrial device, a customer identifier, contact information for one or more customer employees, a notification preference, or a service contract active between the technical support entity and an owner of the industrial device.
Embodiment 6. The system of embodiment 4, wherein the customer data processing component is further configured to identify at least one of a performance aspect or a configuration aspect of the industrial device that has deviated from a previously established baseline based on a comparison of the support request data with the customer data.
Embodiment 7. The system of embodiment 4, wherein the customer data processing component is further configured to generate at least one of a work order or a purchase order based on the support request data.
Embodiment 8. The system of embodiment 4, wherein the system is configured to classify the customer data according to at least one of a device class, a process class, an asset class, or a system class.
Embodiment 9. The system of embodiment 6, further comprising a technical support interface component configured to generate a graphical representation of an industrial system that includes the industrial device based on the customer data.
Embodiment 10. The system of embodiment 9, wherein the technical support interface component is further configured to superimpose a graphical indication that identifies the at least one of the performance aspect or the configuration aspect that has deviated from the previously established baseline.
Embodiment 11. A method for providing remote technical support for an industrial system, comprising:
   receiving, at a cloud platform, support request data from an industrial device of an industrial system, wherein the support request data indicates a technical support issue;
   routing, by a remote support service executing on the cloud platform, the support request data to a client device associated with a technical support entity in response to the receiving.
Embodiment 12. The method of embodiment 11, wherein the receiving comprises receiving at least one of a device identifier of the industrial device, an event log recorded by the industrial device, a current firmware version installed on the industrial device, one or more configuration parameter settings of the industrial device, performance data generated or collected by the industrial device, information relating to one or more other industrial devices that interact with the industrial device, network architecture information describing an architecture of a network on which the industrial device resides, or a network traffic statistic for the network.
Embodiment 13 The method of embodiment 11, further comprising selecting, by the remote support service, the technical support entity based on matching a type of the technical support issue with one or more competency profiles corresponding to respective technical support entities.
Embodiment 14. The method of embodiment 11, further comprising adding supplemental data to the support request data based on analysis of customer data relating to the industrial system maintained in cloud storage on the cloud platform.
Embodiment 15. The method of embodiment 14, further comprising classifying the customer data according to at least one of a device class, a process class, an asset class, or a system class.
Embodiment 16. The method of embodiment 14, wherein the customer data comprises at least one of identification of industrial devices comprising the industrial system, configuration information for the industrial devices, relationships between the industrial devices, an industrial application performed by the industrial devices, historical performance data for the industrial system, a customer identifier, contact information for one or more customer employees, a notification preference, or a service contract active between the technical support entity and an owner of the industrial system.
Embodiment 17. The method of embodiment 14, further comprising:
   comparing the support request data with baseline data defining baseline tolerances for one or more operational or configuration aspects of the industrial system; and
   identifying an operational or configuration aspect of the industrial system that has deviated from a corresponding baseline tolerance based on a result of the comparing.
Embodiment 18. A computer-readable medium having stored thereon computer-executable instructions that, in response to execution, cause a computing system to perform operations, the operations comprising:
   receiving, at a cloud platform, support request data from one or more industrial devices comprising an industrial system, wherein the support request data relates to technical support issue;
   sending, by a remote support service executing on the cloud platform, the support request data to a client device associated with a technical support entity in response to the receiving.
Embodiment 19. The computer-readable medium of embodiment 18, wherein the operations further comprise:
   comparing a type of the technical support issue with one or more competency profiles corresponding to respective technical support entities; and
   selecting, by the remote support service, the technical support entity based on a result of the comparing.
Embodiment 20. The computer-readable medium of embodiment 18, wherein the operations further comprise:
   comparing the support request data with baseline data defining baseline tolerances for one or more operational or configuration aspects of the industrial system; and
   identifying an operational or configuration aspect of the industrial system that has deviated from a corresponding baseline tolerance based on a result of the comparing.

## Claims

1. A system that facilitates remote technical assistance for industrial assets, comprising:
a memory that stores computer-executable components;
a processor, operatively coupled to the memory, that executes computer-executable components, the computer-executable components comprising:
a device interface component configured to receive support request data from an industrial device via a cloud platform, wherein the support request data relates to a technical support issue; and
a technical support routing component configured to deliver the support request data to a client device associated with a technical support entity via the cloud platform in response to receipt of the support request data.

2. The system of claim 1, wherein the support request data comprises at least one of a device identifier of the industrial device, an event log recorded by the industrial device, a current firmware version installed on the industrial device, one or more configuration parameter settings of the industrial device, performance data generated or collected by the industrial device, information relating to one or more other industrial devices that interact with the industrial device, network architecture information describing an architecture of a network on which the industrial device resides, or a network traffic statistic for the network.

3. The system of claim 1 or 2, wherein the technical support routing component is further configured to select the technical support entity based on a comparison of a characteristic of the technical support issue with one or more competency profiles describing areas of expertise for respective technical support entities.

4. The system of any one of claims 1 to 3, further comprising a customer data processing component configured to add supplemental data to the support request data based on previously collected customer data maintained on cloud storage of the cloud platform.

5. The system of claim 4, wherein the customer data comprises at least one of identification of industrial devices comprising one or more industrial assets, configuration information for the industrial devices, relationships between the industrial devices, an industrial application performed by the industrial devices, historical performance data for the industrial device, a customer identifier, contact information for one or more customer employees, a notification preference, or a service contract active between the technical support entity and an owner of the industrial device.

6. The system of claim 4, wherein the customer data processing component is further configured to identify at least one of a performance aspect or a configuration aspect of the industrial device that has deviated from a previously established baseline based on a comparison of the support request data with the customer data.

7. The system of claim 4, wherein the customer data processing component is further configured to generate at least one of a work order or a purchase order based on the support request data.

8. The system of claim 4, wherein the system is configured to classify the customer data according to at least one of a device class, a process class, an asset class, or a system class; and/or
further comprising a technical support interface component configured to generate a graphical representation of an industrial system that includes the industrial device based on the customer data.

9. The system of claim 8, wherein the technical support interface component is further configured to superimpose a graphical indication that identifies the at least one of the performance aspect or the configuration aspect that has deviated from the previously established baseline.

10. A method for providing remote technical support for an industrial system, comprising:
receiving, at a cloud platform, support request data from an industrial device of an industrial system, wherein the support request data indicates a technical support issue;
routing, by a remote support service executing on the cloud platform, the support request data to a client device associated with a technical support entity in response to the receiving.

11. The method of claim 10, wherein the receiving comprises receiving at least one of a device identifier of the industrial device, an event log recorded by the industrial device, a current firmware version installed on the industrial device, one or more configuration parameter settings of the industrial device, performance data generated or collected by the industrial device, information relating to one or more other industrial devices that interact with the industrial device, network architecture information describing an architecture of a network on which the industrial device resides, or a network traffic statistic for the network.

12. The method of claim 10 or 11, further comprising selecting, by the remote support service, the technical support entity based on matching a type of the technical support issue with one or more competency profiles corresponding to respective technical support entities; or
further comprising adding supplemental data to the support request data based on analysis of customer data relating to the industrial system maintained in cloud storage on the cloud platform; or
further comprising classifying the customer data according to at least one of a device class, a process class, an asset class, or a system class.

13. The method of claim 12, wherein the customer data comprises at least one of identification of industrial devices comprising the industrial system, configuration information for the industrial devices, relationships between the industrial devices, an industrial application performed by the industrial devices, historical performance data for the industrial system, a customer identifier, contact information for one or more customer employees, a notification preference, or a service contract active between the technical support entity and an owner of the industrial system; or
further comprising:
comparing the support request data with baseline data defining baseline tolerances for one or more operational or configuration aspects of the industrial system; and
identifying an operational or configuration aspect of the industrial system that has deviated from a corresponding baseline tolerance based on a result of the comparing.

14. A computer-readable medium having stored thereon computer-executable instructions that, in response to execution, cause a computing system to perform operations, the operations comprising:
receiving, at a cloud platform, support request data from one or more industrial devices comprising an industrial system, wherein the support request data relates to technical support issue;
sending, by a remote support service executing on the cloud platform, the support request data to a client device associated with a technical support entity in response to the receiving.

15. The computer-readable medium of claim 14, wherein the operations further comprise:
comparing a type of the technical support issue with one or more competency profiles corresponding to respective technical support entities; and
selecting, by the remote support service, the technical support entity based on a result of the comparing; or
wherein the operations further comprise:
comparing the support request data with baseline data defining baseline tolerances for one or more operational or configuration aspects of the industrial system; and
identifying an operational or configuration aspect of the industrial system that has deviated from a corresponding baseline tolerance based on a result of the comparing.
